# EUROPEAN PATENT APPLICATION

(11) **EP 4 752 649 A1**
(43) Date of publication of application: **03.06.2026**
(21) Application number: 24903937.1
(22) Date of filing: 21.10.2024
(51) Int. Cl.: G04G 17/08, G06F 1/16, G04G 17/04

(54) **ELECTRONIC DEVICE COMPRISING KEY ASSEMBLY**

(30) Priority: 15.12.2023 KR 20230182779; 02.01.2024 KR 20240000374
(71) Applicant: Samsung Electronics Co., Ltd., Suwon-si, Gyeonggi-do 16677 (KR)
(72) Inventor: OH, Donggyu, Suwon-si Gyeonggi-do 16677 (KR)
(74) Representative: Appleyard Lees IP LLP
(86) International application number: PCT/KR2024/016004
(87) International publication number: WO 2025/127370

(57) **Abstract**

According to an embodiment of the present disclosure, an electronic device may comprise: a housing comprising a first accommodation space extending in a first direction from the outer surface of a side member toward the inside thereof, and at least one second accommodation space at a position spaced apart from the outer surface of the side member, extending from the inner wall of the first accommodation space in a second direction crossing the first direction; and a key assembly at least partially accommodated in the first accommodation space and the second accommodation space. In the embodiment, the key assembly may comprise: a body part, of which at least a portion is disposed in the first accommodation space, and which comprises at least one first engagement hole extending from the outer surface, and at least one second engagement hole extending from the inner surface; a key cap coupled to the outer surface of the body part by comprising at least one first engagement hook that engages with the at least one first engagement hole; and an interference member, which is coupled to the inner surface of the body part by comprising at least one second engagement hook that engages with the at least one second engagement hole, and of which at least a portion is accommodated in the second accommodation space. Various other embodiments may also be possible.

## Description

### [Technical Field]

An embodiment(s) of the disclosure relates to an electronic device, e.g., an electronic device including a key assembly.

### [Background Art]

Typically, an electronic device may refer to a device that performs a designated function according to an installed program, such as home appliances, electronic organizers, portable multimedia players, mobile communication terminals, tablet PCs, video/audio devices, desktop/laptop computers, or vehicle navigation systems. As the integration density of electronic devices increases and ultra-high-speed, high-capacity wireless communication becomes common, various functions may be mounted on a single, miniaturized electronic device such as a mobile communication terminal. For example, not only a communication function but also an entertainment function such as a game, a multimedia function such as music/video playback, a communication and security function for mobile banking, and a schedule management or electronic wallet function are being integrated into a single electronic device.

Recently, wearable electronic devices that may be worn on the human body are commercially available, and mobile communication terminals and wearable electronic devices are being routinely utilized. A wearable electronic device may remain in contact with the user's body for a long time and may thus be useful for medical or healthcare purposes. For example, according to equipped sensors, an electronic device may detect the user's biometric information, such as photoplethysmograph (PPG), sleep interval, skin temperature, heart rate and/or electrocardiogram. The detected biometric information may be stored in the electronic device or transmitted to a medical institution in real time to be utilized for healthcare of the user. In general, an electronic device has a bar shape, a box shape, or a flat plate shape, but a wearable electronic device may be composed of multiple segments considering wearing convenience while adapting to the curves of a user's body. For example, a wrist-type wearable electronic device may include a housing, which serves as a main body to receive various circuit devices, and at least one wearing member, and a face-worn electronic device may include lenses corresponding to the user's eyes and at least one temple bow(s).

The above-described information may be provided as related art for the purpose of aiding understanding of the disclosure. No assertion or determination is made as to whether any of the above-described content may be applied as prior art in relation to the disclosure.

### [Detailed Description of the Invention]

### [Technical Solution]

According to an embodiment of the disclosure, an electronic device may include a housing including a first accommodation space extending along a first direction from an outer surface of a side member toward an inner side of the side member, and at least one second accommodation space extending from an inner wall of the first accommodation space in a second direction crossing the first direction at a position spaced apart from the outer surface of the side member, and a key assembly at least partially accommodated in the first accommodation space and the second accommodation space. In an embodiment, the key assembly may include a body portion at least partially disposed in the first accommodation space and including at least one first binding hole extending from an outer surface and at least one second binding hole extending from an inner surface, a key cap coupled to the outer surface of the body portion by including a first binding hook engaged with the at least one first binding hole, and an interference member coupled to the inner surface of the body portion by including a second binding hook engaged with the at least one second binding hole and at least partially accommodated in the second accommodation space.

According to an embodiment of the disclosure, an electronic device may include a housing including an accommodation space extending along a direction from an outer surface of a side member toward an inner side of the side member, and a key assembly at least partially accommodated in the accommodation space. In an embodiment, the key assembly may include a body portion at least partially disposed in the accommodation space, a key cap coupled to an outer surface of the body portion, the key cap including an operation rod extending from an inner surface and protruding from an inner surface of the body portion, and a fixing member coupled to the operation rod and supported on an inner surface of the side member. In an embodiment, a distance measured in a length direction of the key cap from the operation rod to an edge of the fixing member may be greater than a diameter of the operation rod or a width of the operation rod measured in the length direction of the key cap.

### [Brief Description of Drawings]

The above-described aspects or other aspects, configurations and/or advantages of an embodiment of the disclosure may become clearer through the following detailed description with reference to the accompanying drawings.
FIG. 1 is a block diagram illustrating an electronic device in a network environment according to an embodiment of the disclosure.
FIG. 2 is a front perspective view illustrating an electronic device according to an embodiment of the disclosure;
FIG. 3 is a rear perspective view illustrating the electronic device of FIG. 2 according to an embodiment of the disclosure;
FIG. 4 is an exploded perspective view illustrating the electronic device of FIG. 2 according to an embodiment of the disclosure.
FIG. 5 is an exploded perspective view illustrating an electronic device according to an embodiment of the disclosure.
FIG. 6 is a side view illustrating the electronic device of FIG. 5 according to an embodiment of the disclosure.
FIG. 7 is a view illustrating a portion of the electronic device cut along line B-B of FIG. 6 according to an embodiment of the disclosure.
FIG. 8 is an enlarged view illustrating a portion E1 of FIG. 6 of a housing of the electronic device according to an embodiment of the disclosure.
FIG. 9 is a first perspective view illustrating a body portion of a key assembly of an electronic device according to an embodiment of the disclosure.
FIG. 10 is a second perspective view illustrating the body portion of the key assembly of the electronic device according to an embodiment of the disclosure.
FIG. 11 is a first perspective view illustrating a key cap of the key assembly of the electronic device according to an embodiment of the disclosure.
FIG. 12 is a second perspective view illustrating the key cap of the key assembly of the electronic device according to an embodiment of the disclosure.
FIG. 13 is a perspective view illustrating a state in which the key cap is being assembled with the body portion of the key assembly of the electronic device according to an embodiment of the disclosure.
FIG. 14 is a perspective view illustrating a state in which an O-ring is assembled to the key cap of the key assembly of the electronic device according to an embodiment of the disclosure.
FIG. 15 is a perspective view illustrating a state in which the key cap is assembled with the body portion of the key assembly of the electronic device according to an embodiment of the disclosure.
FIG. 16 is a view illustrating a state in which the key cap is assembled with the body portion of the key assembly of the electronic device according to an embodiment of the disclosure.
FIG. 17 is a view illustrating the key assembly of the electronic device cut along line C-C of FIG. 16 according to an embodiment of the disclosure.
FIG. 18 is a first perspective view illustrating an interference member of the key assembly of the electronic device according to an embodiment of the disclosure.
FIG. 19 is a second perspective view illustrating the interference member of the key assembly of the electronic device according to an embodiment of the disclosure.
FIG. 20 is a view illustrating a state in which the interference member of the key assembly of the electronic device is disposed in a housing according to an embodiment of the disclosure.
FIGS. 21 and 22 are views illustrating an operation in which the interference member of the key assembly of the electronic device is disposed in the housing according to an embodiment of the disclosure.
FIGS. 23 and 24 are views illustrating an operation in which the body portion and/or the key cap of the key assembly of the electronic device is assembled to the interference member according to an embodiment of the disclosure.
FIG. 25 is a view illustrating a state in which the body portion and/or the key cap of the key assembly of the electronic device is assembled to the interference member according to an embodiment of the disclosure.
FIG. 26 is a view illustrating a state in which the body portion and/or the key cap of the key assembly of the electronic device is assembled to the interference member according to an embodiment of the disclosure, and illustrates the electronic device and/or the key assembly cut along line D-D of FIG. 25.
FIG. 27 is a view illustrating a state in which the key assembly of the electronic device is disposed in the housing according to an embodiment of the disclosure.
FIG. 28 is a side view illustrating a key assembly of an electronic device according to an embodiment of the disclosure.
FIG. 29 is a plan view illustrating the key assembly of the electronic device according to an embodiment of the disclosure.
FIG. 30 is a view illustrating the key assembly cut along line E-E of FIG. 29 according to an embodiment of the disclosure.
FIG. 31 is a plan view illustrating a body portion of the key assembly of the electronic device according to an embodiment of the disclosure.
FIG. 32 is a side view illustrating the body portion of the key assembly of the electronic device according to an embodiment of the disclosure.
FIG. 33 is a perspective view illustrating a key cap of the key assembly of the electronic device according to an embodiment of the disclosure.
FIG. 34 is a bottom view illustrating the key cap of the key assembly of the electronic device according to an embodiment of the disclosure.
FIG. 35 is a side view illustrating the key cap of the key assembly of the electronic device according to an embodiment of the disclosure.
FIG. 36 is a view illustrating the key cap of the key assembly of the electronic device cut along line F-F of FIG. 35 according to an embodiment of the disclosure.
FIG. 37 is a view illustrating an operation in which the key cap is assembled to the body portion of the key assembly of the electronic device according to an embodiment of the disclosure.
FIG. 38 is a view illustrating an operation in which the key cap is assembled to the body portion of the key assembly of the electronic device according to an embodiment of the disclosure.
FIG. 39 is an exploded perspective view illustrating a key assembly of an electronic device according to an embodiment of the disclosure.
FIG. 40 is a side view illustrating a key assembly of an electronic device according to an embodiment of the disclosure.
FIG. 41 is a plan view illustrating the key assembly of the electronic device according to an embodiment of the disclosure.
FIG. 42 is a view illustrating the key assembly of the electronic device cut along line G-G of FIG. 41 according to an embodiment of the disclosure.
FIG. 43 is a plan view illustrating a body portion of the key assembly of the electronic device according to an embodiment of the disclosure.
FIG. 44 is a perspective view illustrating the body portion of the key assembly of the electronic device according to an embodiment of the disclosure.
FIG. 45 is a perspective view illustrating a key cap of the key assembly of the electronic device according to an embodiment of the disclosure.
FIG. 46 is a side view illustrating the key cap of the key assembly of the electronic device according to an embodiment of the disclosure.
FIG. 47 is a plan view illustrating a state in which the key assembly of the electronic device is disposed in the housing or the side member according to an embodiment of the disclosure.
FIG. 48 is a perspective view illustrating a state in which the key assembly of the electronic device is disposed in the housing or the side member according to an embodiment of the disclosure.
FIG. 49 is a first perspective view illustrating a fixing member of the key assembly of the electronic device according to an embodiment of the disclosure.
FIG. 50 is a second perspective view illustrating the fixing member of the key assembly of the electronic device according to an embodiment of the disclosure.
FIG. 51 is a view illustrating an operation in which the fixing member of the key assembly of the electronic device is assembled according to an embodiment of the disclosure.
FIG. 52 is a view illustrating a state in which the fixing member of the key assembly of the electronic device is assembled according to an embodiment of the disclosure.
FIG. 53 is a view illustrating a state in which the fixing member of the key assembly of the electronic device is assembled according to an embodiment of the disclosure, and illustrates the electronic device cut along line H-H of FIG. 47.
FIG. 54 is a view illustrating a state in which the fixing member of the key assembly of the electronic device is assembled according to an embodiment of the disclosure.
FIG. 55 is a view illustrating a fixing member of the key assembly of the electronic device according to an embodiment of the disclosure.
FIG. 56 is a view illustrating a fixing member of the key assembly of the electronic device according to an embodiment of the disclosure.
FIG. 57 is a view illustrating a state in which a fixing member of the key assembly of the electronic device is assembled according to an embodiment of the disclosure.
FIG. 58 is a view illustrating a fixing member of the key assembly of the electronic device according to an embodiment of the disclosure.
FIG. 59 is a view illustrating a state in which the fixing member of the key assembly of the electronic device is assembled according to an embodiment of the disclosure.
FIG. 60 is a view illustrating a state in which the fixing member of the key assembly of the electronic device is assembled according to an embodiment of the disclosure, and illustrates the electronic device cut along line I-I of FIG. 59.
FIG. 61 is a view illustrating an operation in which the fixing member of the key assembly of the electronic device is assembled according to an embodiment of the disclosure.
FIG. 62 is a view illustrating a state in which the fixing member of the key assembly of the electronic device is assembled according to an embodiment of the disclosure.
FIG. 63 is a view illustrating a support structure of a fixing member of the key assembly of the electronic device according to an embodiment of the disclosure.

Throughout the accompanying drawings, like reference numerals may be allocated to like portions, configurations, and/or structures.

### [Mode for Carrying out the Invention]

An electronic device wearable on a body may have an appearance of a wristwatch or glasses, but may perform complex functions different from general wristwatches or glasses. In implementing complex functions different from traditional wristwatches or glasses, the electronic device may provide visual or auditory information to a user using an output device (e.g., a vibration motor, a display, and/or a speaker), and/or may receive a user input through an input device (e.g., a mechanical operation type key, a touch screen, and/or a microphone). The mechanical operation type key is an input device mounted on a traditional wristwatch, and may be useful in the electronic device as it may be utilized as an electrode for electrocardiogram or heart rate detection. However, there may be a limitation in implementing a key with a stable mounting structure in an electronic device that is downsized or lightened to a degree capable of providing a comfortable wearing sensation.

An embodiment of the disclosure is intended to at least solve the above-described problems and/or disadvantages and to at least provide advantages described below, and may provide an electronic device including a key assembly that has a simplified structure and is stably mounted.

An embodiment of the disclosure may provide an electronic device including a key assembly having a stable operation structure in which movement on a housing or a side member is suppressed.

The technical problems to be achieved in this document are not limited to the technical problems mentioned above, and other technical problems not mentioned is clearly understood by those skilled in the art to which the disclosure belongs from the following description.

The following description of the accompanying drawings may provide an understanding of various exemplary implementations of the disclosure including the claims and their corresponding contents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and conciseness.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

It should be understood that the singular forms "a", "an", and "the" include plural meanings unless the context clearly indicates otherwise. Thus, as an example, "a component surface" may be interpreted as including one or more of the surfaces of a component.

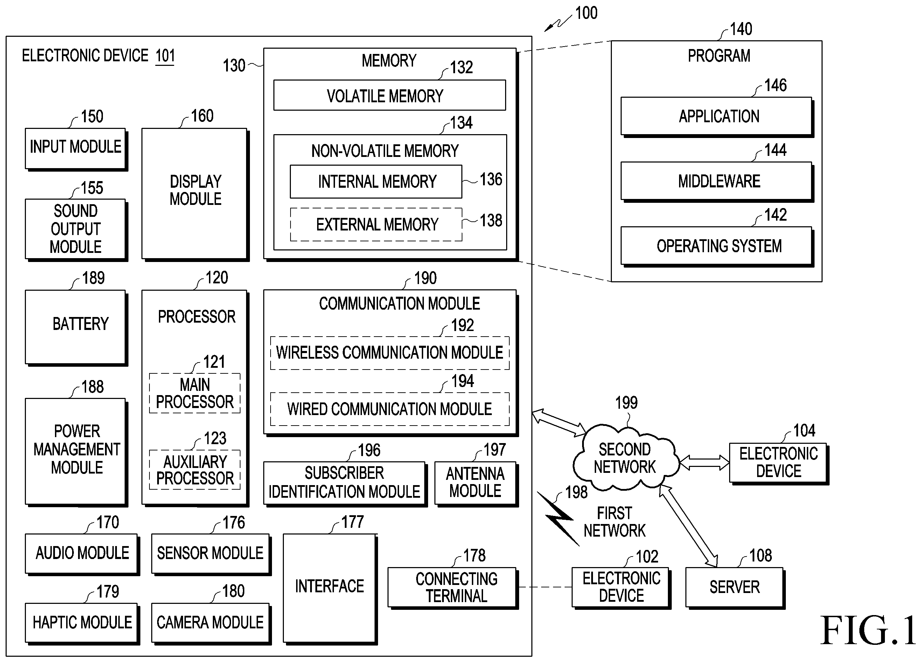

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. In connection to the description of the drawings, similar reference numerals may be used for similar or related components. It is to be understood that a singular form of a noun corresponding to an item may include one or more of the things, unless the relevant context clearly indicates otherwise. In this document, phrases such as "A or B", "at least one of A and B", "at least one of A or B", "A, B or C", "at least one of A, B and C", and "at least one of A, B, or C" may each include any one of the items listed together in the corresponding phrase, or all possible combinations thereof. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiment(s) of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the following detailed description, a length direction, a width direction, and/or a thickness direction of the electronic device may be mentioned and may be defined as a 'Y-axis direction,' 'X-axis direction', and/or 'Z-axis direction,' respectively. In an embodiment, regarding the direction that a component faces, 'negative/positive (-/+)' may be mentioned together with the orthogonal coordinate system illustrated in the drawings. For example, the front surface of the electronic device and/or housing may be defined as a 'surface facing in the +Z direction,' and the rear surface may be defined as a 'surface facing in the -Z direction'. In an embodiment, the side surface of the electronic device and/or housing may include an area facing in the +X direction, an area facing in the +Y direction, an area facing in the -X direction, and/or an area facing in the -Y direction. In an embodiment, the 'X-axis direction' may mean including both the '-X direction' and the '+X direction'. It should be noted that this is based on the orthogonal coordinate system described in the drawings for conciseness of description, and descriptions of these directions or components do not limit the embodiment(s) of the disclosure. For example, the Cartesian coordinate system may be defined as different from that disclosed in the disclosure depending on the specifications of the electronic device or the user's usage habits.

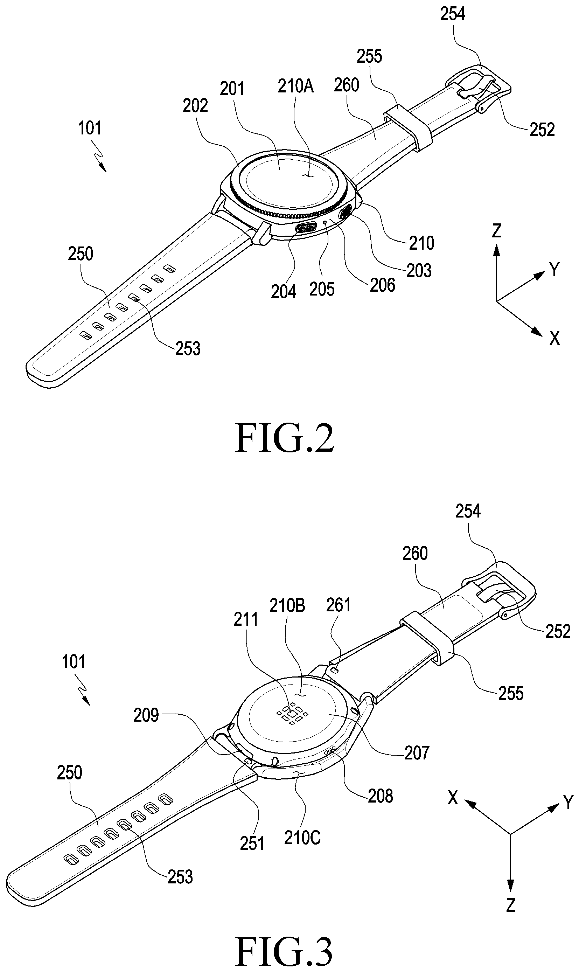

FIG. 2 is a front perspective view illustrating an electronic device according to an embodiment of the disclosure; FIG. 3 is a rear perspective view illustrating the electronic device of FIG. 2 according to an embodiment of the disclosure; The embodiment(s) of FIGS. 2 and 3 may be selectively combined with the embodiment of FIG. 1 or the embodiment(s) described below to implement additional embodiments.

Referring to FIGS. 2 and 3, an electronic device 101 may include a housing 210 or wearing members 250 and 260. The housing 210 may include a first surface (or front surface) 210A, a second surface (or rear surface) 210B, or a side surface 210C. The side surface 210C may surround a space between the first surface 210A and the second surface 210B. In an embodiment, the wearing members 250 and 260 may be connected to at least a portion of the housing 210 and be configured to detachably fasten the electronic device 101 to the user's body portion (e.g., wrist or ankle). For example, the electronic device 101 may be of a wrist watch type.

According to an embodiment, the housing 210 may refer to a structure forming a portion of the first surface 210A of FIG. 2, the second surface 210B of FIG. 3, and the side surfaces 210C. In an embodiment, at least part of the first surface 210A may have a substantially transparent front plate 201 (e.g., a glass plate or polymer plate including various coat layers). The second surface 210B may be formed by a rear plate 207 that is substantially opaque. According to an embodiment, when the electronic device 101 includes a sensor module 211 disposed on the second surface 210B, the rear plate 207 may at least partially include a transparent area. The rear plate 207 may be formed of, e.g., laminated or colored glass, ceramic, polymer, metal (e.g., aluminum, stainless steel (STS), or magnesium), or a combination of at least two thereof. The side surface 210C may be formed by a side bezel structure (or a "side member") 206 that couples to the front plate 201 and the rear plate 207 and includes a metal and/or polymer. In an embodiment, the rear plate 207 and the side bezel structure 206 may be integrally formed and may include the same material (e.g., a metal material such as aluminum). The wearing members 250 and 260 may be formed of various materials and in various shapes. A uni-body structure or multiple unit links which is flexible may be formed of fabric, leather, rubber, urethane, metal, ceramic, or a combination of at least two thereof.

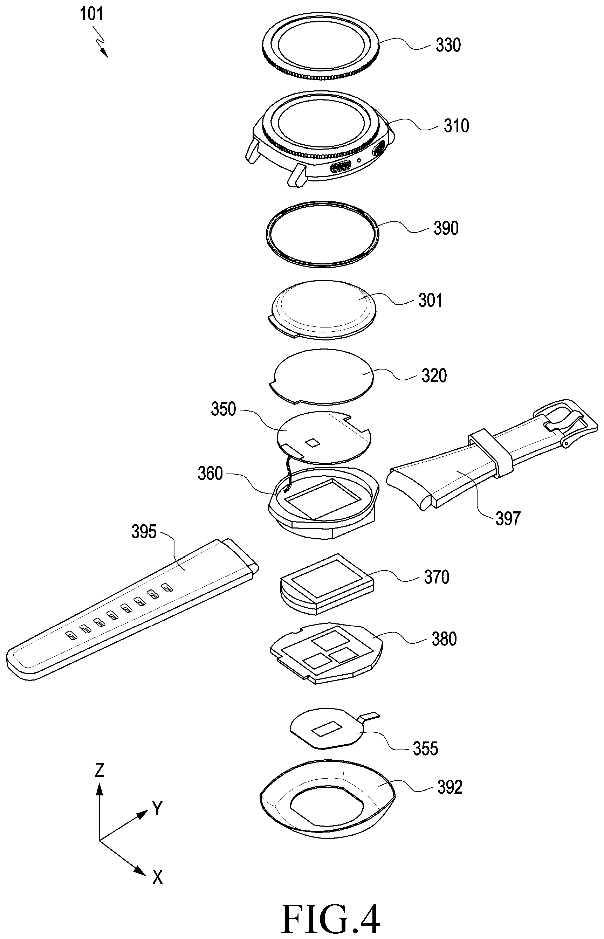

According to an embodiment, the electronic device 101 may include a display (e.g., the display 320 of FIG. 4), audio modules 205, 208 (e.g., the audio module 170 of FIG. 1), a sensor module 211 (e.g., the sensor module 176 of FIG. 1), key input devices 202, 203, 204 (e.g., the input module 150 of FIG. 1), or a connector hole 209 (e.g., the connecting terminal 178 of FIG. 1). According to an embodiment, the electronic device 101 may exclude at least one (e.g., the key input devices 202, 203, and 204, connector hole 209, or sensor module 211) of the components or may add other components.

According to an embodiment, the display (e.g., the display 320 of FIG. 4) may be visually exposed through a significant portion of the front plate 201. The display may have a shape corresponding to the shape of the front plate 201, e.g., a circle, ellipse, or polygon. The display may be coupled with, or disposed adjacent, a touch detection circuit, a pressure sensor capable of measuring the strength (pressure) of touches, and/or fingerprint sensor.

The audio modules 205 and 208 may include a microphone hole 205 and a speaker hole 208. A microphone for acquiring external sounds may be disposed in the microphone hole 205. In an embodiment, a plurality of microphones may be disposed to detect the direction of the sound. The speaker hole 208 may be used as an external speaker and a receiver for calls. According to an embodiment, a speaker may be included without the speaker hole (e.g., a piezo speaker).

The sensor module 211 may produce an electrical signal or data value corresponding to the internal operation state or external environment state of the electronic device 101. The sensor module 211 may include, e.g., a biometric sensor module 211 (e.g., HRM sensor) disposed on the second surface 210B of the housing 210. The electronic device 101 may further include at least one of a sensor module not illustrated, e.g., a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

The key input devices 202, 203, and 204 may include a wheel key 202 disposed on the first surface 210A of the housing 210 to be rotatable in at least one direction and/or key buttons 203 and 204 disposed on the side surface 210C of the housing 210. The wheel key 202 may have a shape corresponding to the shape of the front plate 201. According to an embodiment, the electronic device 101 may exclude all or some of the above-mentioned key input devices 202, 203, and 204 and the excluded key input devices 202, 203, and 204 may be implemented in other forms, e.g., as soft keys on the display. The connector hole 209 may receive a connector (e.g., a universal serial bus (USB) connector) for transmitting and receiving power and/or data to/from an external electronic device. Another connector hole (not shown) may be included for receiving a connector for transmitting and receiving audio signals to/from the external electronic device. The electronic device 101 may further include, e.g., a connector cover (not illustrated) that covers at least a portion of the connector hole 209 and blocks inflow of foreign objects from outside into the connector hole.

The wearing members 250 and 260 may detachably be fastened to at least portions of the housing 210 via locking members 251 and 261. The locking members 251 and 261 may include components or parts for coupling, such as pogo pins, and, according to an embodiment, may be replaced with protrusions or recesses formed on/in the wearing members 250 and 260. For example, the wearing members 250 and 260 may be coupled by engaging with a recess or protrusion formed in the housing 210. The wearing members 250 and 260 may include one or more of a fastening member 252, fastening member coupling holes 253, a band guide member 254, and a band fastening ring 255.

The fastening member 252 may be configured to allow the housing 210 and the wearing members 250 and 260 to be fastened to the user's body portion (e.g., wrist or ankle). The fixing member fastening hole 253 may correspond to the fixing member 252 to fix the housing 210 and the wearing members 250 and 260 to the user's body part. The band guide member 254 may be configured to restrict movement of the fastening member 252 to a certain range when the fastening member 252 fits into one of the fastening member coupling holes 253, thereby allowing the wearing members 250 and 260 to be tightly fastened onto the user's body portion. The band fastening ring 255 may limit the range of movement of the wearing members 250 and 260, with the fastening member 252 fitted into one of the fastening member coupling holes 253.

FIG. 4 is an exploded perspective view illustrating the electronic device of FIG. 2 according to an embodiment of the disclosure. The embodiment of FIG. 4 may be selectively combined with the embodiment(s) of FIGS. 1 to 3, or the embodiment(s) described below to implement additional embodiments.

Referring to FIG. 4, the electronic device 101 (e.g., the electronic device 101 of FIG. 1, or the electronic device 101 of FIGS. 2 to 3) may include a side bezel structure 310 (e.g., the side bezel structure 206 of FIGS. 2 to 3), a wheel key 330 (e.g., the wheel key 202 of FIGS. 2 to 3), a front plate 301 (e.g., the front plate 201 of FIG. 2), a display 320, a first antenna 350, a second antenna (e.g., an antenna included in the second circuit board 355), a supporting member 360 (e.g., a bracket), a battery 370, a printed circuit board 380, a sealing member 390, a rear plate 392, and wearing members 395, 397 (e.g., the wearing members 250, 260 of FIG. 2 or 3). At least one of the components of the electronic device 101 may be the same or similar to at least one of the components of the electronic device 101 of FIG. 2 or 3 and no duplicate description is made below.

According to an embodiment, the supporting member 360 may be disposed inside the electronic device 101 to be connected with the side bezel structure 310 (e.g., a side member) or integrated with the side bezel structure 310. The supporting member 360 may be formed of, e.g., a metal and/or non-metallic material (e.g., polymer). The display 320 (e.g., the display module 160 of FIG. 1) may be joined onto one surface of the supporting member 360, and the printed circuit board 380 may be joined onto the opposite surface of the supporting member 360. A processor, memory, and/or interface may be mounted on the printed circuit board 380.

The processor (e.g., the processor 120 of FIG. 1) may include one or more of, e.g., a central processing unit, an application processor, a graphic processing unit (GPU), a sensor processor, or a communication processor.

The memory (e.g., the memory 130 of FIG. 1) may include, e.g., volatile or non-volatile memory.

The interface (e.g., the interface 177 of FIG. 1) may include, for example, a high definition multimedia interface (HDMI), a universal serial bus (USB) interface, a secure digital (SD) card interface, and/or an audio interface. The interface may electrically or physically connect the electronic device 101 to an external electronic device, e.g., and may include a USB connector, an SD card/MMC connector, or an audio connector.

According to an embodiment, the battery 370 (e.g., the battery 189 of FIG. 1) may be a device for supplying power to at least one component of the electronic device 101, and may include, e.g., a primary cell which is not rechargeable, a secondary cell which is rechargeable, or a fuel cell. At least a portion of the battery 370 may be disposed on substantially the same plane as the printed circuit board 380, for example. The battery 370 may be integrally disposed inside the electronic device 101 or may be detachably disposed with the electronic device 101.

According to an embodiment, the first antenna 350 (e.g., the antenna module 197 of FIG. 1) may be disposed between the display 320 and the supporting member 360. The first antenna 350 may include, e.g., a near-field communication (NFC) antenna, a wireless charging antenna, and/or a magnetic secure transmission (MST) antenna. The first antenna 350 may perform short-range communication with an external device, wirelessly transmit/receive power necessary for charging, or transmit magnetic-based signals including payment data or short-range communication signals. In an embodiment, an antenna structure may be formed by a portion or combination of the side bezel structure 310 and/or the supporting member 360.

According to an embodiment, the second circuit board 355 may be disposed between the circuit board 380 and the rear plate 392. The second circuit board 355 may include an antenna (e.g., the antenna module 197 of FIG. 1), e.g., a near-field communication (NFC) antenna, a wireless charging antenna, and/or a magnetic secure transmission (MST) antenna. For example, the second circuit board 355 may perform short-range communication with an external device, wirelessly transmit/receive power necessary for charging, or transmit magnetic-based signals including payment data or short-range communication signals. According to an embodiment, an antenna structure may be formed of a portion or combination of the side bezel structure 310 and/or the rear plate 392. According to various embodiments, when the electronic device 101 (e.g., the electronic device 101 of FIGS. 2 and 3) includes a sensor module (e.g., the sensor module 211 of FIG. 3), the sensor circuit disposed on the second circuit board 355 or a sensor element (e.g., a photoelectric conversion element or an electrode pad) separate from the second circuit board 355 may be disposed. For example, an electronic component provided as the sensor module may be disposed between the circuit board 380 and the rear plate 392.

According to an embodiment, the sealing member 390 may be positioned between the side bezel structure 310 and the front plate 301. The sealing member 390 may be configured to block or reduce moisture or foreign bodies that may enter the space surrounded by the side bezel structure 310 and the front plate 301, from the outside.

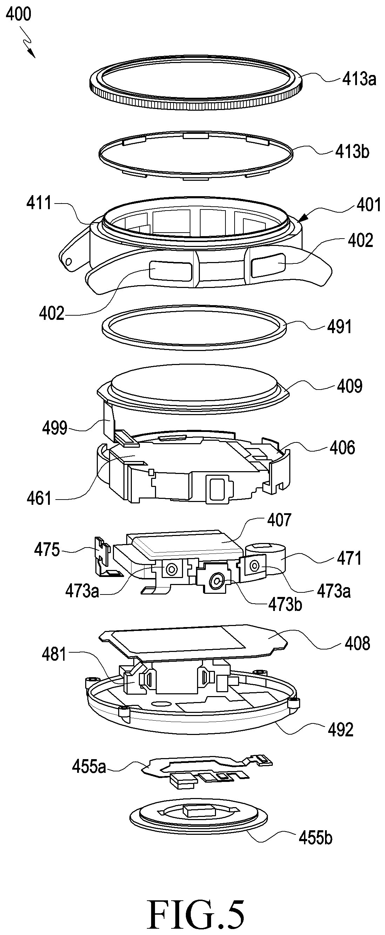

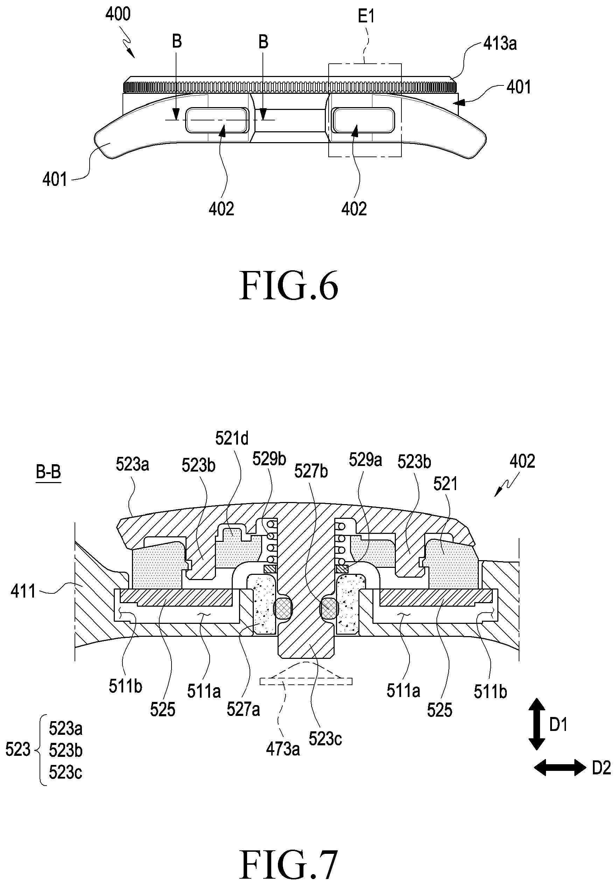

FIG. 5 is an exploded perspective view illustrating an electronic device 400 (e.g., the electronic device 101 of FIG. 4) according to an embodiment of the disclosure. FIG. 6 is a side view illustrating the electronic device 400 of FIG. 5 according to an embodiment of the disclosure.

Referring to FIGS. 5 and 6, the electronic device 400 may be identical or similar to, e.g., the electronic device 101 of FIG. 1 or at least one of the components of the electronic device 101 of FIGS. 2 to 4, and description of configurations that are identical or similar to those of the preceding embodiment may be omitted below. In an embodiment, the electronic device 400 may be a wearable electronic device that may be used while being worn on a user's body. However, it should be noted that the embodiment(s) of the disclosure are not limited thereto.

According to an embodiment, the electronic device 400 may include a housing 401, a display 409, and a battery 407, and may be used while being worn on the user's body by including the wearing member 250, 260 of FIG. 2 and/or FIG. 3. In an embodiment, the electronic device 400 may be configured to output visual information through at least a portion of a front surface (e.g., the first surface 210A of FIG. 2) of the housing 401 using the display 409. In an embodiment, the display 409 (e.g., the front plate 201 of FIG. 2) may be understood as a portion of the housing 401.

According to an embodiment, the housing 401 may provide a space for receiving electronic components such as the display 409 or the battery 407, and may include a side member 411 and/or a rear plate 492 (e.g., the rear plate 392 of FIG. 4). In an embodiment, the housing 401 may at least partially include an electrically conductive material, and a portion of the housing implemented with the electrically conductive material may function as an antenna or an electrode. In an embodiment, the term 'electrode' may refer to a portion that a user may contact, e.g., a portion used when detecting user biometric information.

According to an embodiment, the side member 411 may be a structure that at least partially surrounds a space between a front surface (e.g., the first surface 210A of FIG. 2) and a rear surface (e.g., the rear surface 210B of FIG. 3) of the housing 401. In an embodiment, the side member 401 may be a structure that substantially surrounds the space between the front surface and the rear surface of the housing 401 by being implemented in a circular or polygonal frame shape. When the electronic device 400 includes the wearing member(s) (e.g., the wearing member 250, 260 of FIG. 2 and/or FIG. 3), the wearing member(s) may be understood to be substantially coupled or connected to the side member 411.

According to an embodiment, the electronic device 400 may include a wheel key 413a disposed on the front surface of the housing 401. The wheel key 413a may be disposed, e.g., around an area where the display 409 outputs a screen. In an embodiment, the wheel key 413a may be disposed in a rotatable state around the display 409. In this case, the side member 411 may be substantially implemented as a circular frame. In an embodiment, the electronic device 400 may receive a user input by detecting a rotation direction of the wheel key 413a or a rotation angle of the wheel key 413a. For example, the electronic device 400 may detect a rotation direction or a rotation amount (e.g., a rotation angle) of the wheel key 413a by including an optical encoder combined with an optical sensor or a Hall sensor 475. Although not illustrated, when configured to detect the rotation of the wheel key 413a using the Hall sensor 475, the electronic device 400 may further include a magnet(s) disposed on the wheel key 413a. The magnets may be disposed at equal angular intervals along a circumferential direction of the wheel key 413a. When the wheel key 413a rotates, the Hall sensor 475 may detect a rotation direction or a rotation angle of the wheel key 413a by sensing the magnet(s) passing through an area adjacent thereto.

According to an embodiment, the electronic device 400 may further include a guide ring 413b provided between the housing 401 (e.g., the side member 411) and the wheel key 413a. When the housing 401 and the wheel key 413a are formed of a metal material, the guide ring 413b may suppress or alleviate friction between the housing 401 and the wheel key 413a, and may provide an environment in which the wheel key 413a may rotate more smoothly. For example, the guide ring 413b may be formed of a polymer synthetic resin such as acetal, and may provide lubricity in the rotation of the wheel key 413a.

Although not illustrated, a serration structure may be provided between the wheel key 413a and the housing 401 (e.g., the side member 411), thereby tactilely or audibly notifying the user of the rotation of the wheel key 413a. The serration structure may be implemented, e.g., by a spring(s) provided in the housing 401 and a ball(s) supported by the spring(s) being in contact with the wheel key 413a. In an embodiment, the wheel key 413a may include grooves (or protrusions) provided in an area or trajectory in contact with the ball(s), thereby contacting, rubbing, or colliding with the ball(s) in a rotation operation.

According to an embodiment, the display 409 may include a front plate (e.g., the front plate 201 of FIG. 1) formed of glass or polymer and a display panel provided on an inner side of the front plate, and may be coupled to the side member 411. The electronic device 400 may suppress (or substantially block) moisture or foreign objects from flowing into the interior of the housing 401 from the outside by including a sealing member 491 (e.g., the sealing member 390 of FIG. 4) provided between the display 409 and the housing 401 (e.g., the side member 411).

According to an embodiment, the rear plate 492 may provide a rear surface (e.g., the second surface 210B of FIG. 3) of the housing 401 by being coupled to the side member 411 in a direction opposite to the display 409. Although not illustrated, another sealing member may be provided at an edge of the rear plate 492, thereby suppressing (or substantially blocking) moisture or foreign objects from flowing into the interior of the housing 401 between the rear plate 492 and the side member 411.

According to an embodiment, electronic components such as the battery 407 and a circuit board 408 may be accommodated in a space between the display 409 and the rear plate 492. In an embodiment, the electronic device 400 may further include a supporting member 406 (e.g., the supporting member 360 of FIG. 4) to suppress or prevent other electronic components from contacting or interfering with the display 409. The supporting member 406 may function as a structure capable of disposing or fixing electronic component(s) such as, e.g., the battery 407, the circuit board 408, the Hall sensor 475, a switch member 473a, a vibration motor 471, and/or a speaker 481 (or a microphone). In an embodiment, the supporting member 406 may have a frame shape surrounding the battery 407, and may substantially block the battery 407 from directly contacting the display 409 by including a protection plate 461 disposed between the battery 407 and the display 409.

According to an embodiment, the circuit board 408 may include an integrated circuit chip on which a processor (e.g., the processor 120 of FIG. 1) or a communication module (e.g., the communication module 190 of FIG. 1) is mounted. In an embodiment, the display 409 may be electrically connected to the circuit board 408 by including a first connection board 499 (e.g., a flexible printed circuit board) bypassing the supporting member 406. In an embodiment, the circuit board 408 may be understood to be disposed to face the display 409 with the supporting member 406 and/or the battery 407 interposed therebetween.

According to an embodiment, the Hall sensor 475, the switch member 473a, and/or the speaker 481 may be disposed around the supporting member 406, e.g., in a gap (or space) between the supporting member 406 and the side member 411. The positions of the Hall sensor 475, the switch member 473a, and/or the speaker 481 may be selected considering the function and operating environment of the corresponding component. For example, the Hall sensor 475 may be disposed adjacent to the wheel key 413a or adjacent to a movement (or rotation) trajectory of the magnet(s) embedded in the wheel key 413a, and the switch member 473a may be disposed at a position where access or manipulation by a user is easy. In an embodiment, the switch member 473a may be electrically connected to the circuit board 408 through a second connection board 473b (e.g., a flexible printed circuit board).

According to an embodiment, the vibration motor 471 may be disposed on one side of the battery 407. The vibration motor 471 may generate a vibration, e.g., when an event (e.g., message reception) designated by the user occurs. In an embodiment, the vibration motor 471 may be disposed to face the display 409 with a portion of the supporting member 406 interposed therebetween. For example, the vibration motor 471 may be understood to be disposed between the supporting member 406 and the circuit board 408.

According to an embodiment, the electronic device 400 may include various sensors disposed on the rear plate 492. For example, the electronic device 400 may include a first sensor assembly 455a disposed between the rear plate 492 and the circuit board 408, and/or a second sensor assembly 455b disposed on the rear plate 492 and at least partially exposed to an external space. In an embodiment, the first sensor assembly 455a and/or the second sensor assembly 455b may be substantially the same as the sensor module 176 of FIG. 1. In an embodiment, the first sensor assembly 455a may sense an operating environment (or operation state) of the electronic device 400 by detecting temperature or humidity inside the housing 401. In an embodiment, the second sensor assembly 455b may include a proximity sensor, an infrared sensor, and/or a biometric sensor, thereby detecting whether the electronic device 400 is worn on the user's body and/or user biometric information when worn on the user's body. In an embodiment, the first sensor assembly 455a and/or the second sensor assembly 455b may be electrically connected to the circuit board 408 through a flexible printed circuit board or a contact terminal (e.g., a pogo pin or a c-clip).

According to an embodiment, the electronic device 400 may include at least one button (e.g., a key assembly 402) as one of input devices. The key assembly 402 is, e.g., a component that a user directly contacts or manipulates, and the switch member 473a may operate as the user manipulates the key assembly 402. For example, the switch member 473a may include a dome switch or a tact switch, and may generate an electrical signal as the key assembly 402 operates. In an embodiment, the key assembly 402 may at least partially include an electrically conductive material. When including the electrically conductive material, the key assembly 402 may be utilized as an electrode for measuring a biometric signal. For example, when the user wears the electronic device 400 on the left wrist and contacts the key assembly 402 with the right hand, the electronic device 400 may measure user biometric information such as an electrocardiogram.

The key assembly 402 of the electronic device 400 is examined in more detail with reference to FIGS. 7 to 27.

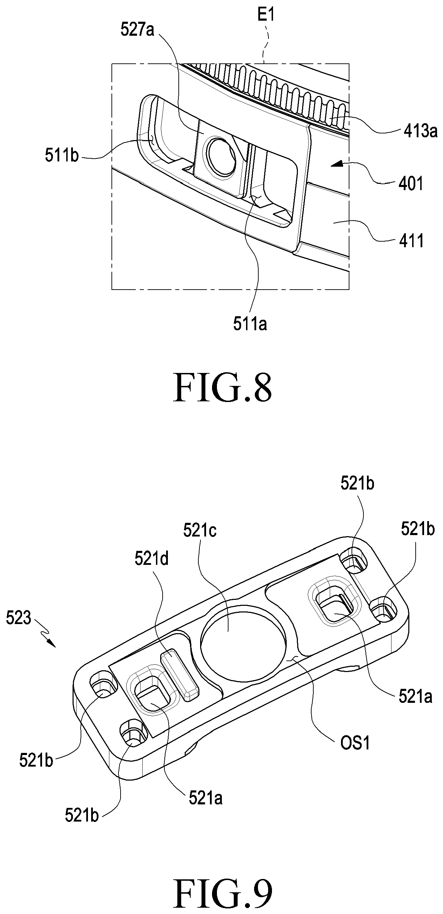

FIG. 7 is a view illustrating a portion of the electronic device (e.g., the electronic device 400 of FIG. 5 or FIG. 6) cut along line B-B of FIG. 6 according to an embodiment of the disclosure. FIG. 8 is an enlarged view illustrating the portion E1 of FIG. 6 of the housing 401 of the electronic device 400 according to an embodiment of the disclosure.

Referring to FIGS. 7 and 8, the key assembly 402 may include a body portion 521, a key cap 523, and/or an interference member(s) 525. The key assembly 402 may be at least partially disposed in an accommodation space 511a, 511b provided in the housing 401, for example. In an embodiment, the key assembly 402 may be movably accommodated within the accommodation space 511a, 511b, e.g., may be accommodated to be capable of reciprocating motion along a first direction D1. In an embodiment, as the key assembly 402 moves, the interference member(s) 525 may interfere with a portion of a structure of the accommodation space 511a, 511b. For example, the interference member(s) 525 may suppress or prevent the key assembly 402 from being separated from the housing 401, and may allow the key assembly 402 to move with respect to the housing 401 within a designated range.

According to an embodiment, when the key assembly 402 is utilized as an electrode for measuring a biometric signal, the key assembly 402 may be electrically insulated with respect to the housing 401 (e.g., the side member 411) by including an insulating structure (e.g., a guide tube 527a). In an embodiment, the guide tube 527a may function as a structure that couples the key assembly 402 to the side member 411. In an embodiment, when the key assembly 402 is utilized for generating an input signal according to a user operation, the interior of the housing 401 (e.g., the side member 411) may include a switch member 473a disposed to face the key assembly 402 (e.g., an operation rod 523c). For example, the switch member 473a may operate to generate an input signal as the user manipulates the key assembly 402.

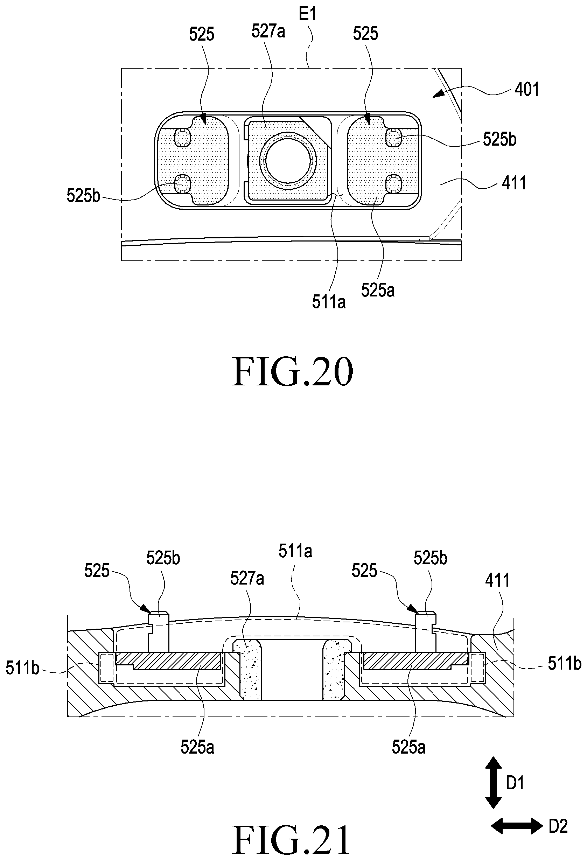

According to an embodiment, the housing 401 and/or the side member 411 may include a first accommodation space 511a provided as a portion of the accommodation space 511a, 511b, and a second accommodation space 511b provided as another portion of the accommodation space 511a, 511b. The shape or area of the first accommodation space 511a and the second accommodation space 511b may be more clearly understood with reference to FIG. 21. In an embodiment, the first accommodation space 511a may extend along the first direction D1 from an outer surface of the side member 411 toward an inner side of the side member 411. For example, the first accommodation space 511a may have a groove shape provided on the outer surface of the side member 411. In an embodiment, the second accommodation space 511b may have a shape extending from an inner wall of the first accommodation space 511a at a position spaced apart from the outer surface of the side member 411. For example, the second accommodation space 511b may extend along a second direction D2 crossing the first direction D1 from the inner wall of the first accommodation space 511a. In an embodiment, when viewed from outside the side member 411 along the first direction D1, the second accommodation space 511b may be understood to be concealed. However, it should be noted that the space in which the key assembly 402 is accommodated is classified into the first accommodation space 511a and the second accommodation space 511b for convenience of description. For example, the second accommodation space 511b may be described as including an area in which the interference member(s) 525 is disposed and/or a lower area of the interference member(s) 525, when viewed in the state illustrated in FIG. 7.

According to an embodiment, the guide tube 527a may be fixed to the side member 411 and disposed on the accommodation space 511a, 511b. For example, a portion of the lower surface of the accommodation space 511a, 511b may be implemented by the guide tube 527a. In an embodiment, when the key assembly 402 is aligned with the switch member 473a, the guide tube 527a may allow the operation rod 523c to pass through, so that an end of the operation rod 523c may be substantially disposed on the inner side of the side member 411 (e.g., an inner space of the housing 401). When the key assembly 402 (e.g., the operation rod 523c) is coupled to the guide tube 527a in a movable state on the housing 401, the guide tube 527a may be formed of a polymer material having lubricity such as acetal. For example, the guide tube 527a may facilitate the movement of the key assembly 402 and may suppress friction or wear due to the movement of the key assembly 402.

According to an embodiment, the body portion 521 may be at least partially disposed in the accommodation space 511a, 511b (e.g., the first accommodation space 511a) and may advance and retreat in the first direction D1 while being guided by the accommodation space 511a, 511b. In an embodiment, the interference member(s) 525 may reciprocate along the first direction D1 on the second accommodation space 511b together with the body portion 521. In an embodiment, in the state illustrated in FIG. 7, the left side of the key assembly 402 or the body portion 521 may move downward in the first direction D1 while the interference member 525 on the right side is supported on an upper end of the second accommodation space 511b. For example, the force pressed by the user may be converted to a direction inclined to the first direction D1. In an embodiment, even when the force pressed by the user acts on the key assembly 402 in a direction inclined to the first direction D1, the key assembly 402 may substantially move in the first direction D1 due to the structure of the guide tube 527a and/or the operation rod 523c. In an embodiment, even when the force pressed by the user acts on the key assembly 402 in a direction inclined to the first direction D1, the operation rod 523c may at least partially move along the first direction D1 by the interference member 525 being supported on the side member 411 (e.g., the upper end of the second accommodation space 511b).

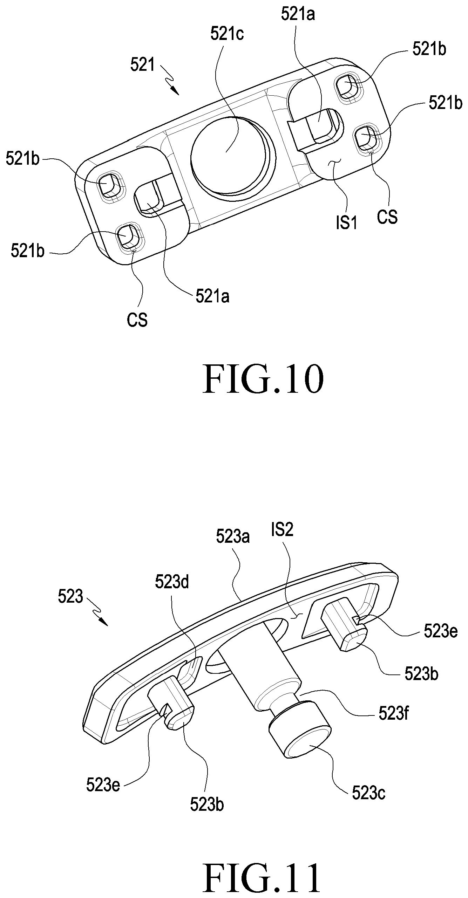

More specific shapes or structures of the body portion 521 is examined with further reference to FIGS. 9 and 10.

FIG. 9 is a first perspective view illustrating the body portion 521 of the key assembly 402 of the electronic device according to an embodiment of the disclosure. FIG. 10 is a second perspective view illustrating the body portion 521 of the key assembly 402 of the electronic device according to an embodiment of the disclosure.

With further reference to FIGS. 9 and 10, the body portion 521 may include a first binding hole(s) 521a, a second binding hole(s) 521b, and/or an operation hole 521c. In an embodiment, the first binding hole(s) 521a may extend from an outer surface OS1 of the body portion 521, and the second binding hole(s) 521b may extend from an inner surface IS1 of the body portion 521. The outer surface OS1 of the body portion 521 may, e.g., refer to a surface facing an external space of the side member 411 when the body portion 521 is disposed in the first accommodation space 511a, and the inner surface IS1 of the body portion 521 may, e.g., refer to a surface facing the inner side of the side member 411 when the body portion 521 is disposed in the first accommodation space 511a.

In the illustrated embodiment, the first binding hole(s) 521a and/or the second binding hole(s) 521b are illustrated in a shape penetrating the body portion 521, but it should be noted that the embodiment(s) of the disclosure is/are not limited thereto. For example, the first binding hole(s) 521a may have one end closed and thus may not be exposed on the inner surface IS1 of the body portion 521. In an embodiment, the second binding hole(s) 521b may have one end closed and thus may not be exposed on the outer surface OS1 of the body portion 521. As is described below, binding hooks of the key cap 523 and/or the interference member(s) 525 may be coupled to the first binding hole(s) 521a and/or the second binding hole(s) 521b. In an embodiment, when the first binding hole(s) 521a and/or the second binding hole(s) 521b have a through structure, internal pressure (e.g., air) of the first binding hole(s) 521a and/or the second binding hole(s) 521b may be smoothly discharged during an operation in which the key cap 523 and/or the interference member(s) 525 is assembled with the body portion 521.

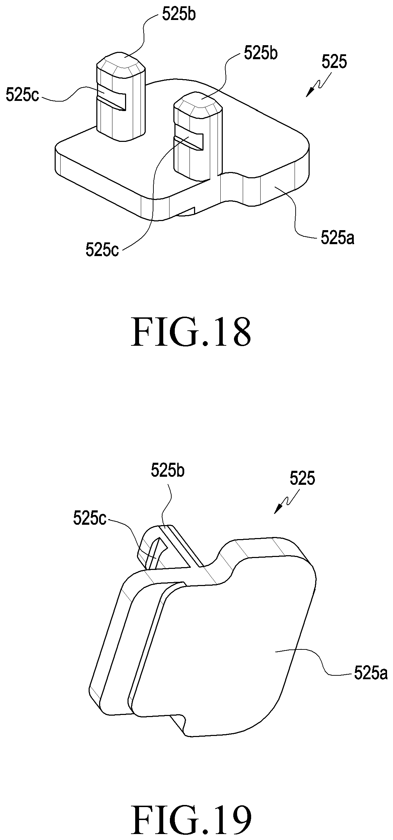

According to an embodiment, the operation hole 521c may be provided as a hole that receives at least a portion of the key cap 523 and/or the operation rod 523c. For example, the key cap 523 may be coupled to the outer surface of the body portion 521 and, when the key cap 523 is coupled to the body portion 521, the operation rod 523c may be disposed to the inner side of the body portion 521 and/or to the inner space of the housing 401 through the operation hole 521c. In an embodiment, the first binding holes 521a may be disposed on two opposite sides of the operation hole 521c. For example, a plurality of first binding holes 521a and/or a plurality of first binding hooks 523b may be provided in binding the key cap 523 to the body portion 521. In an embodiment, the second binding holes 521b may be disposed on two opposite sides of the operation hole 521c. For example, a plurality of second binding holes 521b and/or a plurality of second binding hooks (e.g., the second binding hook 525b of FIG. 18) may be provided in binding the interference member 525 to the body portion 521. In the illustrated embodiment, it may be understood that a pair of second binding holes 521b is provided on one side of the operation hole 521c, and another pair of second binding holes 521b is provided on the other side of the operation hole 521c.

According to an embodiment, the key assembly 402 and/or the body portion 521 may further include an inclined surface or a curved surface CS connecting an inner circumferential surface of the second binding hole(s) 521b and the inner surface IS1 of the body portion 521. The inclined surface or the curved surface CS may facilitate assembly of the interference member 525, for example. For example, even when the interference member 525 and the body portion 521 are not properly aligned, an inlet of the second binding hole(s) 521b may be provided sufficiently large, so that a portion of the interference member 525 (e.g., the second binding hook 525b of FIG. 18) may easily enter the second binding hole(s) 521b. Although not allocated a reference numeral, the key assembly 402 and/or the body portion 521 may further include an inclined surface or a curved surface connecting an inner circumferential surface of the first binding hole(s) 521a and the outer surface of the body portion 521. However, the embodiment(s) of the disclosure is/are not limited thereto, and the key cap 523 and the body portion 521 may be easily aligned at an assembly position by an operator or a jig, and thus the inclined surface or the curved surface connecting the inner circumferential surface of the first binding hole(s) 521a and the outer surface of the body portion 521 may be omitted.

According to an embodiment, the key assembly 402 and/or the body portion 521 may further include an alignment protrusion 521d provided on the outer surface of the body portion 521. The alignment protrusion 521d may be provided on one side of the operation hole 521c, e.g., and may not be provided on the other side. In an embodiment, the alignment protrusions 521d may be provided on two opposite sides of the operation hole 521c, respectively, but may be disposed at positions asymmetric with respect to the operation hole 521c or may have different shapes from each other. The key cap 523 is a structure coupled to the outer surface of the body portion 521 and, when the key cap 523 has an asymmetric shape, the alignment protrusion 521d may guide a coupling direction of the key cap 523 and the body portion 521.

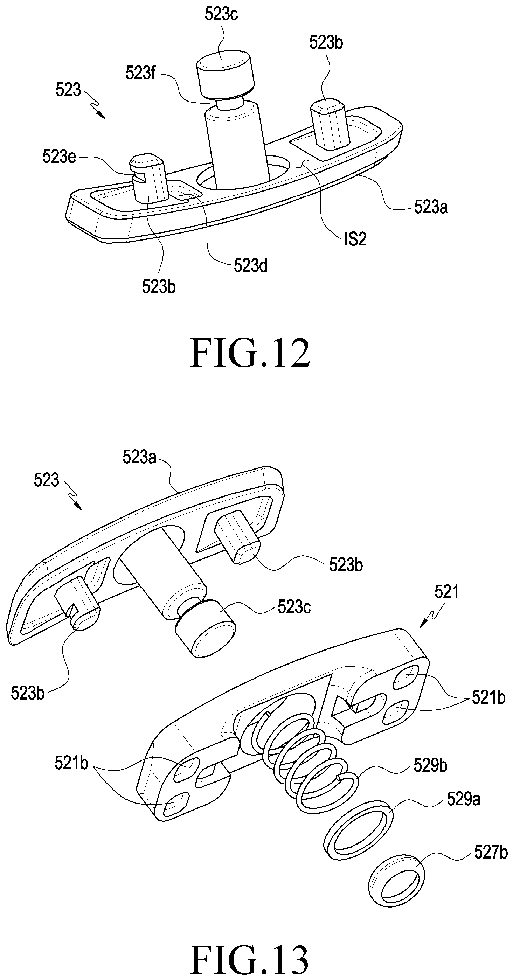

Referring back to FIG. 7, the key cap 523 may be coupled to the body portion 521 in a designated direction while being guided by the alignment protrusion 521d. For example, the key cap 523 may reciprocate on the side member 411 together with the body portion 521. More specific shapes or structures of the key cap 523 is examined with further reference to FIGS. 11 and 12.

FIG. 11 is a first perspective view illustrating the key cap 523 of the key assembly (e.g., the key assembly 402 of FIG. 7) of the electronic device according to an embodiment of the disclosure. FIG. 12 is a second perspective view illustrating the key cap 523 of the key assembly 402 of the electronic device according to an embodiment of the disclosure.

With further reference to FIGS. 11 and 12, the key cap 523 may include a key plate 523a, a first binding hook(s) 523b, and/or an operation rod 523c. In an embodiment, the key assembly 402 may at least partially include an electrically conductive material. For example, when the key assembly 402 is utilized as an electrode for measuring a biometric signal, the key plate 523a and/or the operation rod 523c may be formed of an electrically conductive material. In an embodiment, when the key plate 523a and/or the operation rod 523c includes an electrically conductive material, the guide tube 527a may electrically insulate the key assembly 402 (e.g., the key plate 523a and/or the operation rod 523c) with respect to the side member 411. In an embodiment, when an electrical insulating structure is unnecessary and sufficient lubricity is secured between the side member 411 and the operation rod 523c, the guide tube 527a may be omitted, and the operation rod 523c may directly penetrate the side member 411 and be partially disposed inside the housing 401.

According to an embodiment, the key plate 523a is a portion that is substantially exposed to the outside of the key assembly 402 and/or the housing 401, and may be a portion that the user directly manipulates or directly contacts. For example, the key plate 523a may have a shape or color harmonized with an appearance of the electronic device (e.g., the electronic device 400 of FIG. 5). In an embodiment, the key plate 523a as a portion that the user directly manipulates or directly contacts may provide a shape, color, and/or surface texture that the user may easily visually or tactilely recognize.

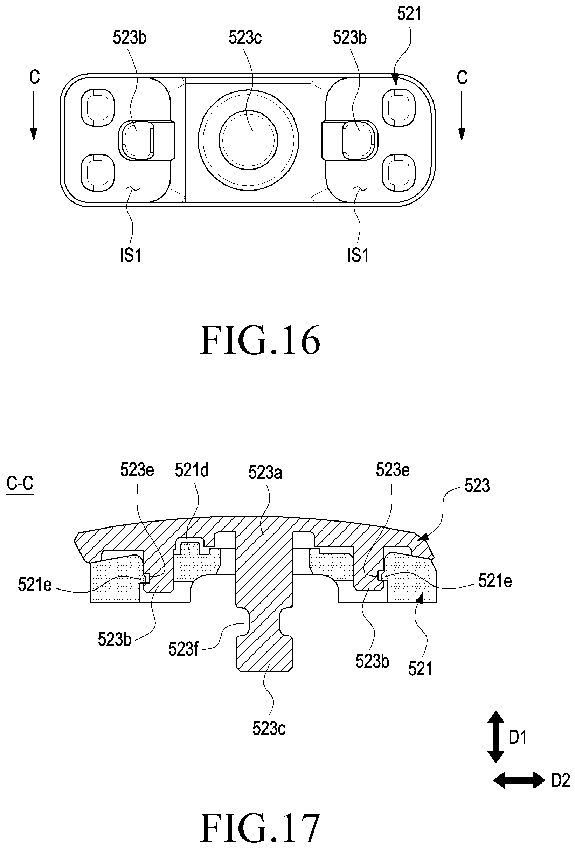

According to an embodiment, the first binding hook(s) 523b may protrude or extend from an inner surface of the key plate 523a. In an embodiment, the first binding hook(s) 523b may be coupled to the first binding hole 521a, thereby fixing the key plate 523a and/or the key cap 523 to the body portion 521. In an embodiment, when a plurality of first binding holes 521a is provided, the key cap 523 may include a plurality of first binding hooks 523b. For example, the plurality of first binding hooks 523b may be provided on two opposite sides of the operation hole 521c or the operation rod 523c, respectively. In an embodiment, the first binding hook(s) 523b may more firmly fix the key cap 523 to the body portion 521 by providing a first binding recess 523e formed on an outer circumferential surface thereof. As is examined with reference to FIG. 17, when the first binding recess 523e is provided on the outer circumferential surface of the first binding hook(s) 523b, a first binding protrusion 521e that engages with the first binding recess 523e may be formed on an inner wall of the first binding hole(s) 521a. In an embodiment, the first binding protrusion 521e may be formed on the first binding hook(s) 523b, and the first binding recess 523e may be provided on the inner wall of the first binding hole(s) 521a.

According to an embodiment, the operation rod 523c may extend from an inner surface IS2 of the key cap 523 and penetrate the operation hole 521c or the guide tube 527a so that a portion thereof is disposed on the inner side of the side member 411. Here, the 'inner surface IS2 of the key cap 523' may substantially refer to an inner surface of the key plate 523a. In an embodiment, since the first binding hook(s) 523b is substantially a structure disposed within the body portion 521, it may be understood that the operation rod 523c extends longer from the inner surface IS2 of the key cap 523 than the first binding hook(s) 523b. In an embodiment, the operation rod 523c may further include a dummy recess 523f provided on at least a portion of an outer circumferential surface thereof. In an embodiment, the dummy recess 523f may have a closed curve trajectory surrounding the operation rod 523c.

According to an embodiment, the key assembly 402 and/or the key cap 523 may further include an alignment recess 523d provided on the inner surface IS2 of the key plate 523a. The alignment recess 523d may be provided on one side of the operation rod 523c, e.g., and may not be provided on the other side. In an embodiment, the alignment recesses 523d may be provided on two opposite sides of the operation rod 523c, respectively, but may be disposed at positions asymmetric with respect to the operation rod 523c or may have different shapes from each other. In an embodiment, the alignment recess(es) 523d may be provided corresponding to the alignment protrusion 521d of the body portion 521. For example, when the key cap 523 is coupled to the body portion 521, the alignment recess 523d may receive at least a portion of the alignment protrusion 521d. By the alignment protrusion 521d and/or the alignment recess 523d being disposed at a position asymmetric with respect to the operation rod 523c or having an asymmetric shape, the key cap 523 may be substantially coupled to the body portion 521 at a position or direction in which the alignment protrusion 521d is accommodated in the alignment recess 523d.

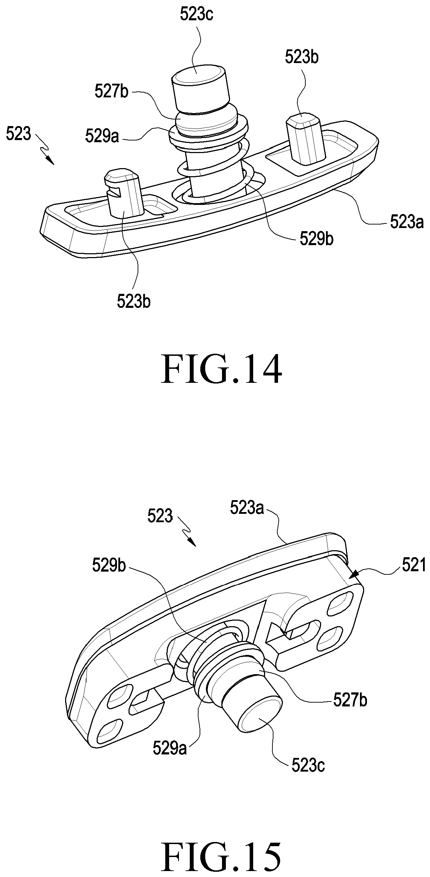

FIG. 13 is a perspective view illustrating a state in which the key cap 523 is being assembled with the body portion 521 of the key assembly (e.g., the key assembly 402 of FIG. 7) of the electronic device according to an embodiment of the disclosure. FIG. 14 is a perspective view illustrating a state in which an O-ring 527b is assembled to the key cap 523 of the key assembly 402 of the electronic device according to an embodiment of the disclosure. FIG. 15 is a perspective view illustrating a state in which the key cap 523 is assembled with the body portion 521 of the key assembly 402 of the electronic device according to an embodiment of the disclosure. FIG. 16 is a view illustrating a state in which the key cap 523 is assembled with the body portion 521 of the key assembly 402 of the electronic device according to an embodiment of the disclosure.

With further reference to FIGS. 13 to 16, the key cap 523 may be assembled to the body portion 521 by an interference fit method. For example, the key cap 523 may be coupled to the body portion 521 by aligning the first binding hook(s) 523b with the first binding hole(s) 521a and bringing the key plate 523a into tight contact with the body portion 521. As described above, the key cap 523 may be aligned or coupled to the body portion 521 in a designated direction while being guided by the alignment protrusion 521d and/or the alignment recess 523d. In firmly coupling the key cap 523 to the body portion 521, a cross-sectional diameter of the first binding hook(s) 523b may be larger than an inner diameter of the first binding hole(s) 521a.

According to an embodiment, when the cross-sectional diameter of the first binding hook(s) 523b is larger than the inner diameter of the first binding hole(s) 521a, the key cap 523 and the body portion 521 may have different elastic moduli. For example, when the key cap 523 includes a metal material having electrical conductivity, the body portion 521 may be formed of a material (e.g., a polymer material) having a smaller modulus of elasticity than the key cap 523. In an embodiment, when the body portion 521 has a lower modulus of elasticity than the key cap 523, the first binding hook(s) 523b may be more closely adhered to an inner circumferential surface of the first binding hole(s) 521a in an operation in which the key cap 523 is coupled to the body portion 521 or in a coupled state, and the key cap 523 may be firmly fixed to the body portion 521. In an embodiment, the first binding hole(s) 521a may extend parallel to a direction in which the first binding hook(s) 523b extends (e.g., the first direction D1 of FIG. 7), so that assembly of the key cap 523 and the body portion 521 may be easy. In an embodiment, the first binding hole(s) 521a may extend inclined (e.g., at an angle of about 5 degrees or less) with respect to the direction in which the first binding hook(s) 523b extends (e.g., the first direction D1 of FIG. 7), so that the key cap 523 may be more firmly fixed to the body portion 521.

According to an embodiment, the key assembly 402 may further include an O-ring 527b. In an embodiment, the O-ring 527b may be coupled to the operation rod 523c and may tightly contact the side member 411 or the guide tube 527a, thereby providing a waterproof/dustproof structure. In an embodiment, when the key cap 523 and/or the operation rod 523c further includes the dummy recess 523f, an assembly position of the O-ring 527b may be guided or the O-ring 527b may be suppressed from being separated from the assembly position. For example, at least a portion of the O-ring 527b may be disposed in the dummy recess 523f. However, the embodiment(s) of the disclosure is/are not limited thereto, and the dummy recess 523f may be omitted. In an embodiment, two or more O-rings 527b and dummy recesses 523f may be provided on the operation rod 523c.

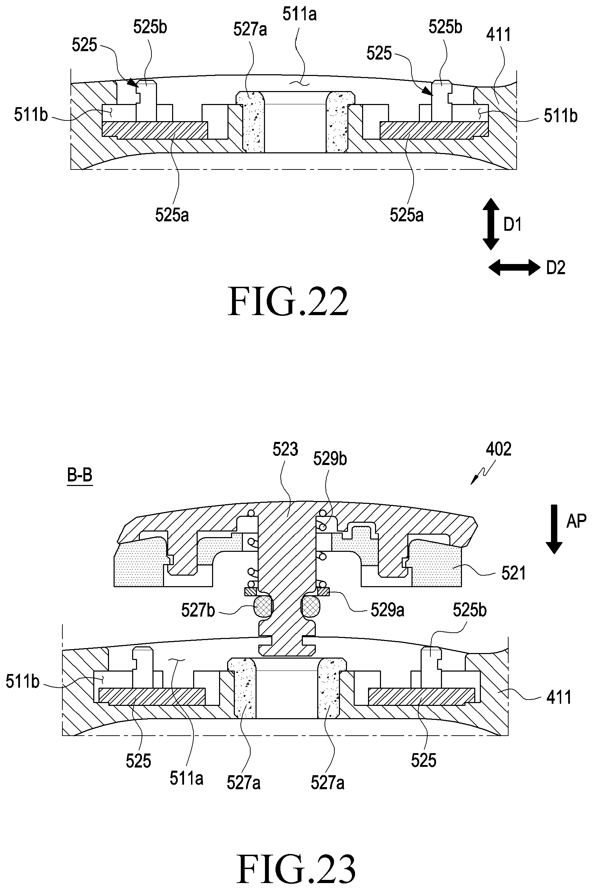

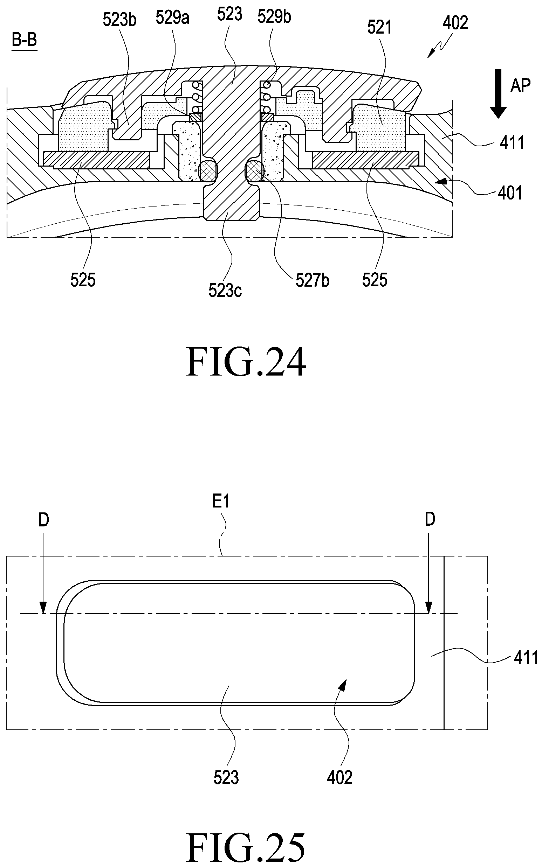

According to an embodiment, the key assembly 402 may further include an elastic member (e.g., a coil spring 529b) and/or a washer 529a. The coil spring 529b and/or the washer 529a may be substantially disposed around the operation rod 523c, and the coil spring 529b may provide an elastic force in a direction of protruding the key assembly 402 toward the outside of the side member 411. For example, the coil spring 529b may be a compression coil spring, one end of which is supported on the inner surface IS2 of the key cap 523 (or the inner surface IS1 of the body portion 521), and the other end of which is supported on a lower surface of the accommodation space (e.g., the accommodation space 511a, 511b of FIG. 7 or FIG. 8), and may provide an elastic force in a direction of separating two opposite ends. When the guide tube 527a is provided in the accommodation space 511a, 511b, the other end of the coil spring 529b may be supported on the guide tube 527a. In an embodiment, the washer 529a may be disposed between the coil spring 529b and the O-ring 527b. For example, the other end of the coil spring 529b may be supported on the washer 529a and may not substantially contact the O-ring 527b. As is examined with reference to FIGS. 23 and 24, when the operation rod 523c enters the inside of the guide tube 527a, the O-ring 527b may be substantially in contact with an inner circumferential surface of the guide tube 527a, and the washer 529a may be disposed in contact with the guide tube 527a on the accommodation space. For example, the coil spring 529b may be understood to be supported on the guide tube 527a via the washer 529a.

FIG. 17 is a view illustrating the key assembly 402 of the electronic device cut along line C-C of FIG. 16 according to an embodiment of the disclosure.

FIG. 17 may illustrate, e.g., a state in which the key cap 523 is coupled to the body portion 521. With further reference to FIG. 17, the key cap 523 has a left-right asymmetric shape, and may be coupled to the body portion 521 in a designated direction while being guided by the alignment protrusion 521d and/or the alignment recess 523d of FIG. 12. The key cap 523 may be fixed to the body portion 521 in a state in which the first binding hook(s) 523b is accommodated inside the body portion 521. Here, the 'state in which the first binding hook(s) 523b is accommodated inside the body portion 521' may refer to a state in which the first binding hook(s) 523b is engaged with the first binding hole(s) 521a. In an embodiment, the first binding protrusion(s) 521e may be formed on an inner wall (or inner circumferential surface) of the first binding hole(s) 521a and may engage with the first binding recess(s) 523e. For example, the key cap 523 may be firmly coupled to the body portion 521 by a combination of a modulus of elasticity of the key cap 523 or the body portion 521, sizes (e.g., cross-sectional diameters or inner diameters) of the first binding hook(s) 523b and the first binding hole(s) 521a, and/or the first binding protrusion(s) 521e and the first binding recess(s) 523e. In a state in which the key cap 523 is coupled to the body portion 521, at least a portion of the operation rod 523c and/or the dummy recess 523f may be substantially disposed toward the inner side (or a lower position) of the body portion 521.

Referring back to FIG. 7, the interference member(s) 525 may be disposed on the inner surface IS1 of the body portion 521 and may protrude at least partially from an edge of the body portion 521. Here, 'the interference member(s) 525 is disposed on the inner surface IS1 of the body portion 521' may refer to a disposition in a state in which the interference member(s) 525 is aligned with the body portion 521 in the first direction D1. In an embodiment, 'the interference member(s) 525 protrudes at least partially from an edge of the body portion 521' may refer to a disposition in which a portion of the interference member(s) 525 protrudes in the second direction D2 from both side edges of the body portion 521.

According to an embodiment, the key assembly 402 may include a pair of interference members 525. For example, the interference member 525 may be disposed at two opposite ends of the body portion 521 in the second direction D2 or a length direction of the key cap 523. In an embodiment, the pair of interference members 525 may be understood to be disposed symmetrically about the operation hole 521c or the operation rod 523c. More specific shapes or structures of the interference member 525 is examined with further reference to FIGS. 18 and 19.

FIG. 18 is a first perspective view illustrating the interference member 525 of the key assembly (e.g., the key assembly 402 of FIG. 7) of the electronic device according to an embodiment of the disclosure. FIG. 19 is a second perspective view illustrating the interference member 525 of the key assembly 402 of the electronic device according to an embodiment of the disclosure.

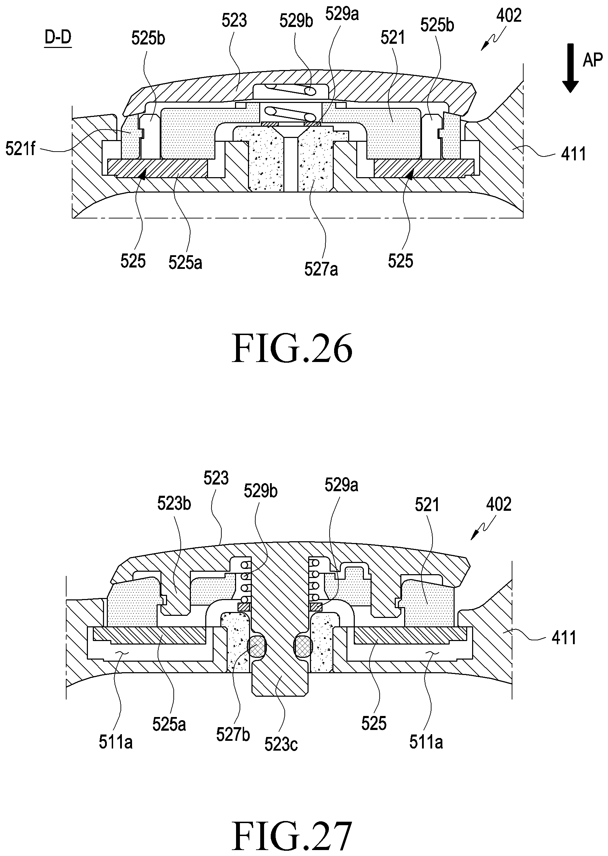

With further reference to FIGS. 18 and 19, the interference member 525 may include an interference plate 525a and/or a second binding hook(s) 525b. The second binding hook(s) 525b may be understood, e.g., as protruding or extending from one surface of the interference plate 525a. In the illustrated embodiment, a configuration in which a pair of second binding hooks 525b is provided on one interference plate 525a may be illustrated. In an embodiment, the second binding hook(s) 525b may engage with the second binding hole(s) 521b, thereby coupling or fixing the interference member 525 to the body portion 521. In an embodiment, the second binding hook 525b may provide a second binding recess 525c, and the interference member 525 may be more firmly fixed to the body portion 521 by the second binding protrusion (e.g., the second binding protrusion 521f of FIG. 26) formed in the second binding hole 521b engaging with the second binding recess 525c.

According to an embodiment, the interference member 525 may prevent the key assembly 402 from being separated from the housing 401 by interfering with the side member 411 and/or by being confined within the accommodation space 511a, 511b in a state substantially coupled to the body portion 521. In an embodiment, as the interference member 525 is confined within the accommodation space 511a, 511b, a range in which the key assembly 402 may move on the housing 401 may be limited. In an embodiment, the interference member 525 may be formed of a rigid material such as a metal. For example, even with repeated interference with the side member 411, the interference member 525 may have sufficient mechanical strength and durability.

According to an embodiment, in coupling the interference member 525 to the body portion 521, relative sizes of a cross-sectional diameter of the second binding hook(s) 525b and an inner diameter of the second binding hole(s) 521b and/or relative elastic moduli of the interference member 525 and the body portion 521 may be similar to the relative configuration of the key cap 523 and the body portion 521. For example, the interference member 525 may have a modulus of elasticity greater than that of the body portion 521, and/or a cross-sectional diameter of the second binding hook(s) 525b may be greater than an inner diameter of the second binding hole(s) 521b. For example, the interference member 525 may be firmly coupled to the body portion 521 by a combination of a modulus of elasticity of the interference member 525 or the body portion 521, sizes (e.g., cross-sectional diameters or inner diameters) of the second binding hook(s) and the second binding hole(s) 521b, and/or the second binding protrusion(s) 521f and the second binding recess(s) 525c. In an embodiment, when the body portion 521 is formed of a synthetic resin, the key cap 523 or the interference member 525 may be formed of a metal. In an embodiment, the body portion 521 may be deformed into a designated shape while the key cap 523 or the interference member 525 is being assembled, and may be restored to an original manufactured shape after the key cap 523 or the interference member 525 is assembled to a designated position.

According to an embodiment, the interference member 525 may be assembled with the body portion 521 in a state disposed in the side member 411 (e.g., the accommodation space 511a, 511b). Operation(s) in which the interference member 525 is assembled to the body portion 521 is examined with reference to FIGS. 20 to 27.

FIG. 20 is a view illustrating a state in which the interference member 525 of the key assembly (e.g., the key assembly 402 of FIG. 7) of the electronic device is disposed in the housing 401 according to an embodiment of the disclosure. FIGS. 21 and 22 are views illustrating an operation in which the interference member 525 of the key assembly 402 of the electronic device is disposed in the housing 401 according to an embodiment of the disclosure.

First, referring to FIGS. 20 to 22, the interference member 525 may be a structure that is substantially accommodated in the second accommodation space 511b and interferes with a wall surface defining a portion of the second accommodation space 511b. For example, the interference member 525 may substantially prevent the key assembly 402 from being separated from the side member 411 by being disposed further inside the accommodation space 511a, 511b than the key cap 523 or the body portion 521 of the key assembly 402 and interfering with the side member 411. In an embodiment, in a state assembled to the body portion 521, the pair of interference members 525 may be impossible to be simultaneously accommodated or assembled in the first accommodation space 511a and/or the second accommodation space 511b. Therefore, in assembling the key assembly 402 to the side member 411, the body portion 521 and/or the key cap 523 may be assembled with the interference members 525 in a state in which the interference members 525 are first disposed in the accommodation space (e.g., the second accommodation space 511b).

According to an embodiment, when viewed along the first direction D1 from outside the side member 411, a remaining area of the first accommodation space 511a except for an area in which the guide tube 527a is disposed may have a shape corresponding to the interference member 525 and/or the interference plate 525a. For example, the interference member 525 may enter the first accommodation space 511a along the first direction D1 and be disposed at a position corresponding to the second accommodation space 511b. In an embodiment, after the interference plate 525a enters the second accommodation space 511b in a state inclined with respect to the first direction D1, the interference member 525 may be disposed in the side member 411 by rotating or turning in a direction of contacting the lower surface of the accommodation space 511a, 511b. The body portion 521 and/or the key cap 523 may be assembled in a state in which the interference member 525 is disposed in the side member 411. Operation(s) in which the body portion 521 and/or the key cap 523 is assembled is examined with reference to FIGS. 23 to 27.

FIGS. 23 and 24 are views illustrating an operation in which the body portion 521 and/or the key cap 523 of the key assembly 402 of the electronic device is assembled to the interference member 525 according to an embodiment of the disclosure.

Referring to FIGS. 23 and 24, the body portion 521 may be disposed in the side member 411 in a state in which the body portion 521, the key cap 523, the O-ring 527b, and/or the coil spring 529b are coupled to each other. Here, 'the body portion 521 is disposed in the side member 411' may refer to the body portion 521 being assembled with the interference member(s) 525 in the side member 411 or the accommodation space 511a, 511b. In FIGS. 23 and 24, the reference numeral 'AP' illustrates a force or direction for assembling the body portion 521 to the interference member(s) 525, and, e.g., the body portion 521 may be assembled with the interference member(s) 525 by an interference fit method.

Comparing FIGS. 22 and 23, it may be seen that the position of the interference member 525 is somewhat different. For example, before being assembled with the body portion 521, the interference member(s) 525 may be disposed at an arbitrary position within the accommodation space 511a, 511b, and the state illustrated in FIG. 23 may illustrate an alignment position where the body portion 521 and the interference member(s) 525 may be assembled. However, at the time of actual assembly, the interference member(s) 525 may be in a state deviated from the alignment position. In an embodiment, the body portion 521 may be easily assembled even when the body portion 521 and the interference member(s) 525 are somewhat misaligned by forming an inlet width (or diameter) of the second binding hole 521b (e.g., the second binding hole(s) 521b of FIG. 10) to be larger than an outer diameter of the second binding hook 525b. In an embodiment, the inner diameter of the second binding hole 521b may be substantially smaller than the outer diameter of the second binding hook 525b, and the inclined surface or the curved surface CS of FIG. 10 may guide the second binding hook 525b to enter the second binding hole 521b at an inlet of the second binding hole 521b. In an embodiment, the second binding hook 525b may easily enter the second binding hole 521b by implementing an outer diameter of an end of the second binding hook 525b to gradually increase or gradually decrease along the first direction D1.

According to an embodiment, before the body portion 521 is coupled to the interference member(s) 525, the operation rod 523c may first enter the guide tube 527a, and the O-ring 527b may be disposed inside the guide tube 527a. In an embodiment, as illustrated in FIG. 24, when the body portion 521 reaches a position where it may no longer enter the inner side of the side member 411, the washer 529a may contact the guide tube 527a on the accommodation space. In an embodiment, 'the position where the body portion 521 may no longer enter the inner side of the side member 411' may refer to a position where the interference member 525 (e.g., the interference plate 525a) is substantially in tight contact with the body portion 521 and in contact with the lower surface of the accommodation space 511a, 511b.

According to an embodiment, when the body portion 521 reaches the position where it may no longer enter the inner side of the side member 411 and the washer 529a contacts the guide tube 527a, the coil spring 529b may accumulate an elastic force. When the body portion 521 reaches the position where it may no longer enter the inner side of the side member 411, the elastic force accumulated in the coil spring 529b may act in a direction of separating the key cap 523 and/or the body portion 521 from the side member 411 or the accommodation space. In an embodiment, when the body portion 521 reaches the position where it may no longer enter the inner side of the side member 411, a portion (e.g., an end portion) of the operation rod 523c may protrude into an inner space of the side member 411. In an embodiment, when the body portion 521 reaches the position where it may no longer enter the inner side of the side member 411, the O-ring 527b may maintain a state of being substantially located inside the guide tube 527a. In an embodiment, when the key assembly 402 is operated by the user, the O-ring 527b may move within the guide tube 527a and rub against the guide tube 527a. In an embodiment, the guide tube 527a may be formed of a synthetic resin having lubricity such as acetal to suppress wear of the O-ring 527b.

FIG. 25 is a view illustrating a state in which the body portion 521 and/or the key cap 523 of the key assembly (e.g., the key assembly 402 of FIG. 7) of the electronic device is assembled to the interference member 525 according to an embodiment of the disclosure. FIG. 26 is a view illustrating a state in which the body portion 521 and/or the key cap 523 of the key assembly 402 of the electronic device is assembled to the interference member 525 according to an embodiment of the disclosure, and illustrates the electronic device and/or the key assembly 402 cut along line D-D of FIG. 25.

With further reference to FIGS. 25 and 26, the above-mentioned 'state in which the body portion 521 reaches the position where it may no longer enter the inner side of the side member 411' may substantially refer to a state in which the body portion 521 and the interference member(s) 525 are assembled to comply with design specifications. When the body portion 521 reaches the position where it may no longer enter the inner side of the side member 411, the second binding hook(s) 525b may engage with one of the second binding holes 521b. In an embodiment, either one of a second binding protrusion 521f and a second binding recess 525c (e.g., the second binding recess 525c of FIG. 18) may be provided on the second binding hook 525b, and the other one of the second binding protrusion 521f and the second binding recess 525c may be provided on the second binding hole 521b, so that the interference member(s) 525 may be more firmly coupled to the body portion 521.

FIG. 27 is a view illustrating a state in which the key assembly 402 of the electronic device is disposed in the housing 401 according to an embodiment of the disclosure.

According to an embodiment, when the interference member(s) 525 is assembled to the body portion 521 and the force AP applied to the key cap 523 and/or the body portion 521 in the assembly operation is removed, the key assembly 402 may protrude to a designated height from the outer surface of the side member 411. For example, by the elastic force accumulated in the coil spring 529b acting, the interference member 525 may be spaced apart from the accommodation space 511a, 511b and a portion of the key assembly 402 may protrude from the outer surface of the side member 411. When a portion of the key assembly 402 protrudes from the side member 411 by the coil spring 529b, the key assembly 402 may maintain a state of being at least partially accommodated in the accommodation space 511a, 511b without being separated from the side member 411 by the interference member 525 contacting or interfering with an internal structure of the side member 411. For example, when viewed in the first direction D1, a portion of the interference member 525 may deviate from the first accommodation space 511a and be accommodated in the second accommodation space 511b, and may suppress or prevent the key assembly 402 from being separated from the accommodation space 511a, 511b by interfering with an inner wall or inner surface of the second accommodation space 511b when the elastic force of the coil spring 529b acts.

According to an embodiment, an adhesive may be provided on at least a portion of an area facing the key cap 523 (e.g., the inner surface IS2 of the key plate 523a of FIG. 12) or at least a portion of an area facing the interference member 525 (e.g., the interference plate 525a of FIG. 18) among the outer surface OS1 and the inner surface IS1 of the body portion 521 of FIG. 9 and/or FIG. 10. For example, the electronic device (e.g., the electronic device 400 of FIG. 4) and/or the key assembly 402 may further include an adhesive to more firmly fix the key cap 523 and the interference member 525 to the body portion 521. In an embodiment, the electronic device 400 and/or the key assembly 402 may further include a separate or additional adhesive provided in the binding holes 521a, 521b of FIG. 10. The adhesive provided in the binding holes 521a, 521b may more firmly couple or fix the binding hooks (e.g., the first binding hook 523b of FIG. 11 or the second binding hook 525b of FIG. 18) to any one of the binding holes 521a, 521b.

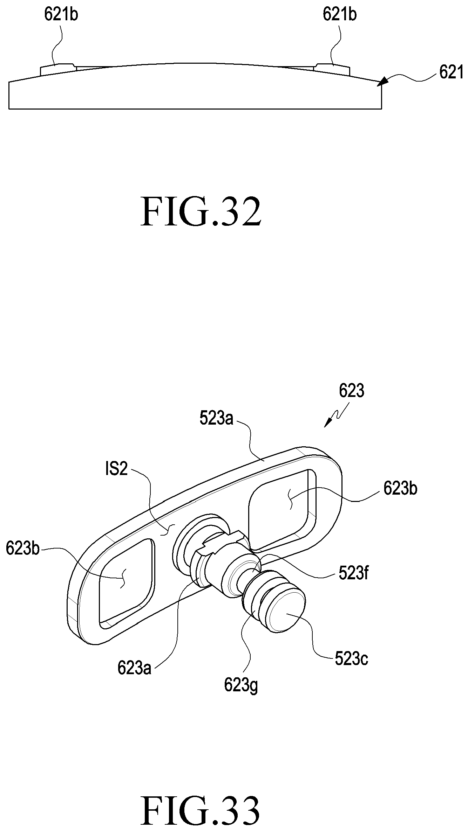

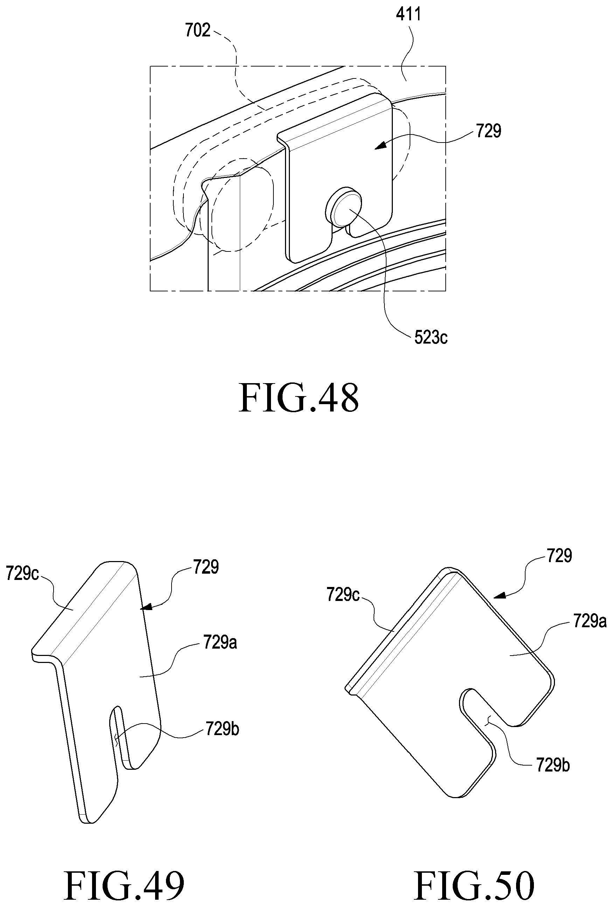

In the following embodiment, configurations that are substantially the same as the preceding embodiment or that may be easily understood through the preceding embodiment may be allocated the same reference numerals or omitted in the drawings, and detailed description thereof may also be omitted. An additional embodiment may be implemented by selectively combining some configurations of the key assembly of the disclosed embodiments with configurations of other embodiments. For example, an additional embodiment may be implemented by replacing the first binding hook 523b of FIG. 12 with the second binding rib 623a of FIG. 33 described below. In an embodiment, an additional embodiment may be implemented by replacing the interference member 525 of FIG. 7 with the fixing member 729 of FIG. 48.

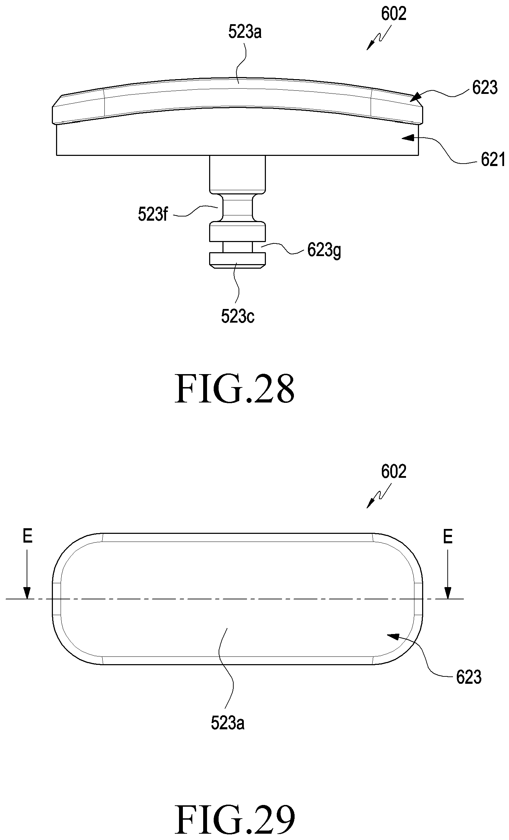

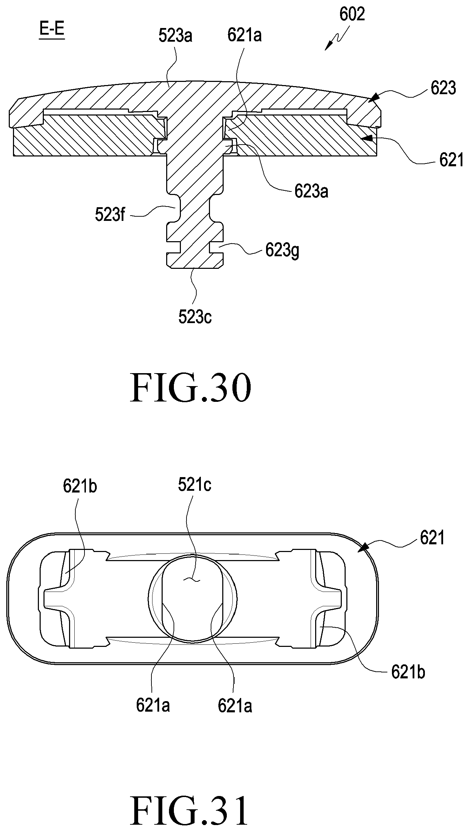

FIG. 28 is a side view illustrating a key assembly 602 (e.g., the key assembly 402 of FIG. 7) of an electronic device according to an embodiment of the disclosure. FIG. 29 is a plan view illustrating the key assembly 602 of the electronic device according to an embodiment of the disclosure. FIG. 30 is a view illustrating the key assembly 602 cut along line E-E of FIG. 29 according to an embodiment of the disclosure.

In an embodiment, the body portion 621 (and/or the key cap 623) of FIGS. 28 to 30 may be at least partially similar to the body portion 621 (and/or the key cap 623) of FIG. 13. For example, although omitted in the embodiment of FIGS. 28 to 30, the key assembly 602 may further include the interference member 525 of FIG. 7 or FIG. 18. When the key assembly 602 of FIGS. 28 to 30 further includes the interference member 525, its shape or structure may be partially different from the interference member 525 of FIG. 7 or FIG. 18.

Referring to FIGS. 28 to 30, the key assembly 602 may include a body portion 621 and a key cap 623. The key cap 623 may include a key plate 523a and an operation rod 523c extending from an inner surface of the key plate 523a, and the key plate 523a may be coupled to an outer surface of the body portion 621 in a state in which the operation rod 523c penetrates the body portion 621. As is further examined with reference to FIG. 31, a first binding rib 621a may be provided on the body portion 621, and a second binding rib 623a may be provided on the operation rod 523c. In an embodiment, the key cap 623 may be fixed to the body portion 621 by the first binding rib 621a being positioned between the key plate 523a and the second binding rib 623a.

According to an embodiment, the key assembly 602 and/or the key cap 623 may include a first dummy recess 523f and a second dummy recess 623g formed on an outer circumferential surface of the operation rod 523c. The first dummy recess 523f may function as, e.g., a structure that guides an assembly position of the O-ring (e.g., the O-ring 527b of FIG. 13 or FIG. 14) or fixes the O-ring 527b. In an embodiment, the first dummy recess 523f may be disposed between the second binding rib 623a and the second dummy recess 623g. In an embodiment, the second dummy recess 623g may be disposed between an end of the operation rod 523c and the first dummy recess 523f. In an embodiment, the first dummy recess 523f and/or the second dummy recess 623g may be formed to have a closed curve trajectory.

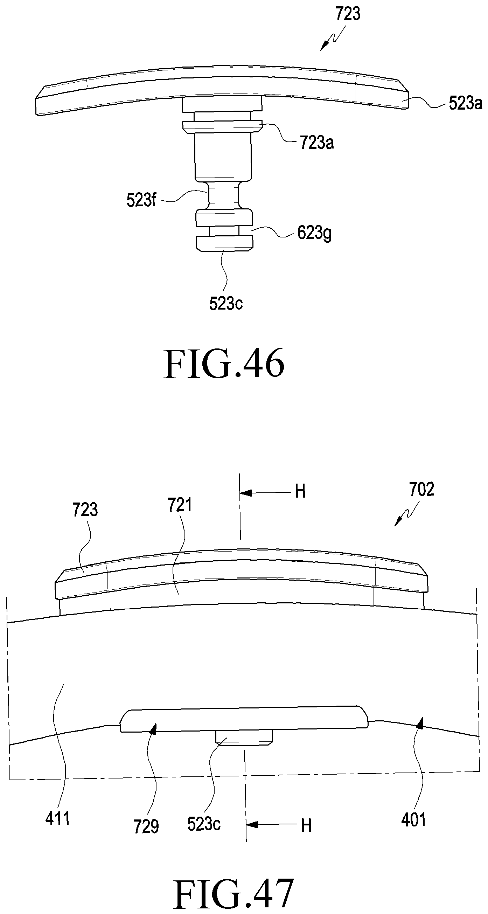

According to an embodiment, the key assembly 602 may not include the interference member 525 of FIG. 7 or FIG. 18. For example, the second dummy recess 623g may be disposed inside the housing 401 or the side member 411 (e.g., the housing 401 or the side member 411 of FIG. 5), and a fixing member (e.g., the fixing member 729 of FIGS. 47 to 50) not illustrated may be coupled to the second dummy recess 623g to couple or confine the key assembly 602 to the housing 401 or the side member 411. In an embodiment, the fixing member may be understood to be included in the key assembly 402.

FIG. 31 is a plan view illustrating the body portion 621 of the key assembly 602 (e.g., the key assembly 402 of FIG. 7) of the electronic device according to an embodiment of the disclosure. FIG. 32 is a side view illustrating the body portion 621 of the key assembly 602 of the electronic device according to an embodiment of the disclosure.

With further reference to FIGS. 31 and 32, the body portion 621 of the key assembly 602 may include protrusions 621b formed on a surface facing the key cap 623, and an operation hole 521c formed in an area between the protrusions 621b. The protrusions 621b may, e.g., be partially accommodated in the key cap 623 to stably couple the body portion 621 and the key cap 623. In an embodiment, an adhesive may be provided in an area or space between the body portion 621 and the key cap 623 to firmly fix the body portion 621 and the key cap 623. In an embodiment, when including the protrusions 621b, the body portion 621 may be formed of an elastic material such as silicone or rubber.

According to an embodiment, when viewed in the plan view illustrating FIG. 31, the operation hole 521c may be generally circular in shape, and since the first binding rib 621a is provided on an inner wall of the operation hole 521c, some sections of an edge of the operation hole 521c may be provided in a linear shape. In the illustrated embodiment, since two first binding ribs 621a are provided, it may be understood that two different sections of the edge of the operation hole 521c are disposed in parallel. When the body portion 621 is formed of an elastic material such as silicone or rubber, the first binding rib 621a may have a larger modulus of elasticity than the remaining portion of the body portion 621. For example, the first binding rib 621a may function as a structure for mechanically binding the key cap 623 and the body portion 621. When the first binding rib 621a is formed of a material different from the remaining portion of the body portion 621, the body portion 621 may be manufactured through a double injection molding or insert injection molding process.

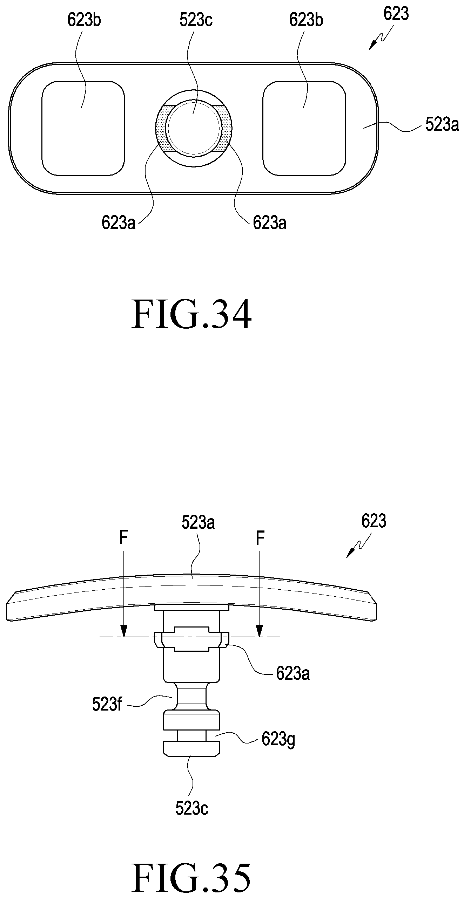

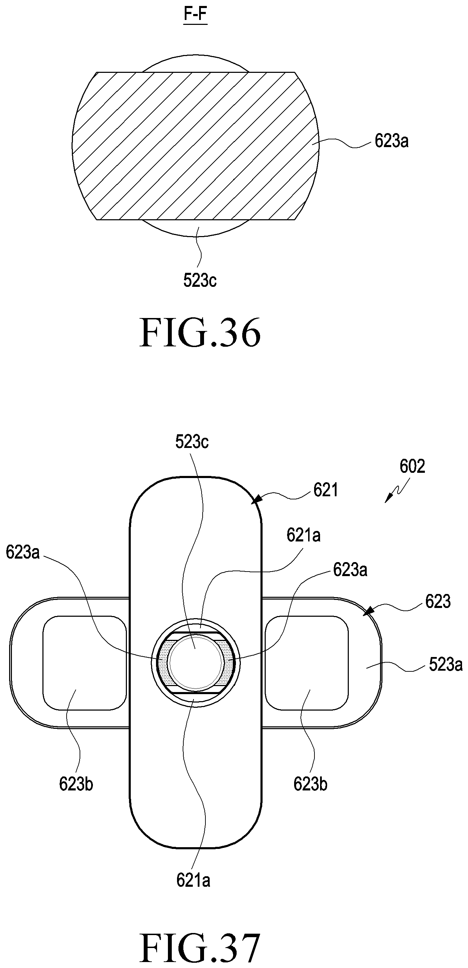

FIG. 33 is a perspective view illustrating the key cap 623 of the key assembly 602 (e.g., the key assembly 402 of FIG. 7) of the electronic device according to an embodiment of the disclosure. FIG. 34 is a bottom view illustrating the key cap 623 of the key assembly 602 of the electronic device according to an embodiment of the disclosure. FIG. 35 is a side view illustrating the key cap 623 of the key assembly 602 of the electronic device according to an embodiment of the disclosure. FIG. 36 is a view illustrating the key cap 623 of the key assembly 602 of the electronic device cut along line F-F of FIG. 35 according to an embodiment of the disclosure.

With further reference to FIGS. 33 to 36, the key cap 623 may include a key plate 523a and an operation rod 523c. In an embodiment, the key plate 523a may further include recessed portions 623b provided on a surface (e.g., the inner surface IS2) facing the body portion 621. The recessed portions 623b may be configured to receive, e.g., any one of the protrusions 621b of the body portion 621. For example, the key cap 623 and the body portion 621 may be firmly fixed to each other by the protrusions 621b and the recessed portions 623b engaging with each other. In an embodiment, an adhesive further provided between the key cap 623 and the body portion 621 may fix the protrusions 621b to a lower surface or a side wall of the recessed portion(s) 623b. In an embodiment, similar to the alignment protrusion 521d of FIG. 9, the protrusions 621b and/or the recessed portions 623b may function as structures that guide a coupling or assembly direction of the key cap 623 and the body portion 621.

According to an embodiment, the second binding rib 623a may be understood to extend from an outer circumferential surface of the operation rod 523c between the first dummy recess 523f and the key plate 523a. In an embodiment, when viewed in the cross-sectional view illustrating FIG. 36, the second binding rib 623a may have a shape corresponding to the operation hole 521c in which the first binding ribs 621a are provided. For example, an edge of the second binding rib 623a may include two linear sections parallel to each other and curved sections connecting the linear sections. In an embodiment, when the first binding ribs 621a are defined as being disposed along a length direction of the body portion 621, the second binding ribs 623a may be understood to extend from the outer circumferential surface of the operation rod 523c along a length direction of the key plate 523a. For example, the second binding ribs 623a may be disposed symmetrically about the operation rod 523c and disposed along the length direction of the key plate 523a.

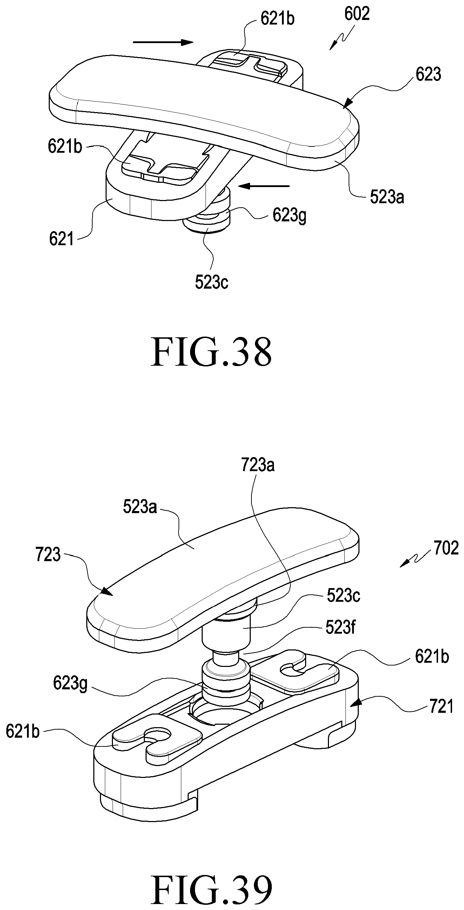

According to an embodiment, the key cap 623 may be coupled or engaged to the body portion 621 by the first binding rib 621a and the second binding rib 623a. In an embodiment, an adhesive may be at least partially provided in an area or space between the key cap 623 (e.g., the key plate 523a) and the body portion 621, so that the key cap 623 may be firmly coupled to the body portion 621. A structure in which the key cap 623 is coupled to the body portion 621 is examined with further reference to FIGS. 37 and 38.

FIG. 37 is a view illustrating an operation in which the key cap 623 is assembled to the body portion 621 of the key assembly 602 (e.g., the key assembly 402 of FIG. 7) of the electronic device according to an embodiment of the disclosure. FIG. 38 is a view illustrating an operation in which the key cap 623 is assembled to the body portion 621 of the key assembly 602 of the electronic device according to an embodiment of the disclosure.

With further reference to FIGS. 37 and 38, the key plate 523a may be disposed at a position contacting the body portion 621 by the operation rod 523c penetrating the operation hole 521c in a state in which the key plate 523a and the body portion 621 are aligned in a direction crossing each other. Here, 'the direction in which the key plate 523a and the body portion 621 intersect each other' may refer to, e.g., a direction in which the second binding rib 623a may pass through the operation hole 521c without interfering with the first binding rib 621a.

In an embodiment, when the second binding rib 623a penetrates the operation hole 521c, a gap between the first binding rib 621a and the key plate 523a may be smaller than a gap between the second binding rib 623a and the key plate 523a. In this state, the key cap 623 may rotate with respect to the body portion 621 so that the length direction of the key plate 523a and the length direction of the body portion 621 substantially coincide. The 'state in which the length direction of the key plate 523a and the length direction of the body portion 621 coincide' may refer to, e.g., the state illustrated in FIGS. 28 to 30. Referring back to FIG. 30, in the state in which the length direction of the key plate 523a and the length direction of the body portion 621 coincide, the first binding rib 621a may be substantially positioned between the key plate 523a and the second binding rib 623a. For example, the key cap 623 may be coupled or fixed to the body portion 621 by the first binding rib 621a being confined between the key plate 523a and the second binding rib 623a.

According to an embodiment, when the key cap 623 (or the key plate 523a) rotates with respect to the body portion 621 in a state in which the second binding rib 623a penetrates the operation hole 521c, the protrusion(s) 621b may interfere with the key plate 523a. In an embodiment, the protrusion 621b may be deformed by the interference of the key plate 523a by being formed of an elastic material such as silicone or rubber. For example, even when the body portion 621 includes the protrusion(s) 621b, the key cap 623 (or the key plate 523a) may rotate with respect to the body portion 621 in a state in which the second binding rib 623a penetrates the operation hole 521c to be aligned or assembled to the state illustrated in FIGS. 28 to 30.

According to an embodiment, when the key cap 623 is aligned or assembled to the state illustrated in FIGS. 28 to 30, the protrusion(s) 621b may be accommodated in any one of the recessed portions 623b of the key cap 623. For example, in a direction in which the operation rod 523c extends, the key cap 623 may be fixed to the body portion 621 by the first binding rib 621a and the second binding rib 623a. In an embodiment, in a rotation direction about the operation rod 523c, the key cap 623 may be fixed to the body portion 621 by the protrusion(s) 621b and the recessed portion(s) 623b. Although not illustrated, an adhesive may be provided in at least a portion of an area or space between the body portion 621 and the key cap 623 so that the key cap 623 may be firmly fixed to the body portion 621.

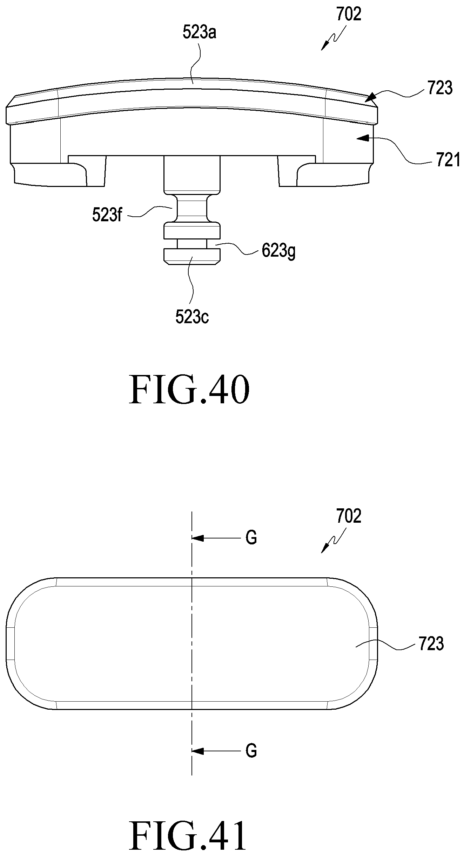

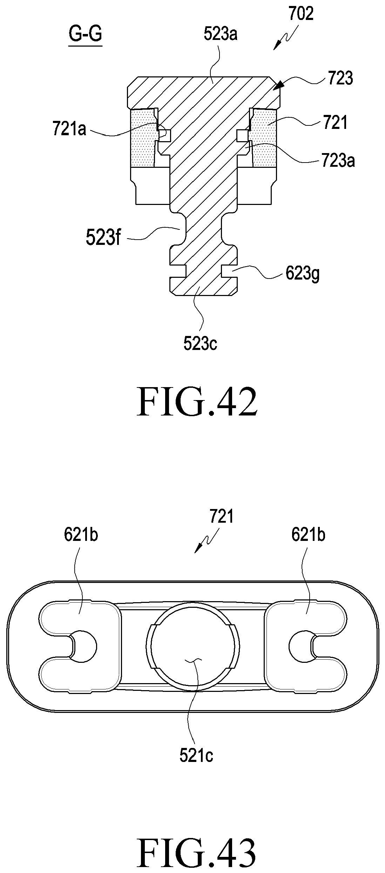

FIG. 39 is an exploded perspective view illustrating a key assembly 702 (e.g., the key assembly 402 of FIG. 7) of an electronic device according to an embodiment of the disclosure. FIG. 40 is a side view illustrating the key assembly 702 of the electronic device according to an embodiment of the disclosure. FIG. 41 is a plan view illustrating the key assembly 702 of the electronic device according to an embodiment of the disclosure. FIG. 42 is a view illustrating the key assembly 702 of the electronic device cut along line G-G of FIG. 41 according to an embodiment of the disclosure.

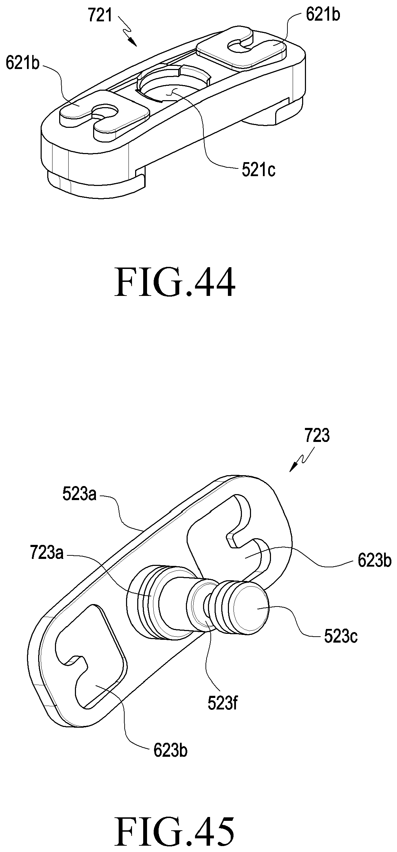

Referring to FIGS. 39 to 42, the key assembly 702 may include a body portion 721 and a key cap 723. The key cap 723 may include a key plate 523a and an operation rod 523c extending from an inner surface of the key plate 523a, and may be coupled to an outer surface of the body portion 721 in a state in which the operation rod 523c penetrates the body portion 721. As illustrated in FIG. 42, the body portion 721 may include a locking step 721a provided on an inner circumferential surface of the operation hole 521c (e.g., the operation hole 521c of FIG. 44), and a binding rib 723a may be provided on the operation rod 523c. In an embodiment, the key cap 723 may be fixed to the body portion 721 by the locking step 721a being positioned between the key plate 523a and the binding rib 723a. The key assembly 402 and/or the key cap 723 may include a first dummy recess 523f and a second dummy recess 623g formed on an outer circumferential surface of the operation rod 523c, and this configuration is similar to the embodiment of FIG. 28, and thus detailed description thereof is omitted.

According to an embodiment, the locking step 721a may be formed to have a closed curve trajectory along a circumferential direction on an inner circumferential surface of the operation hole 521c. In an embodiment, the binding rib 723a may protrude or extend from an outer circumferential surface of the operation rod 523c. In an embodiment, the binding rib 723a may be formed to have a closed curve trajectory along a circumferential direction on the outer circumferential surface of the operation rod 523c. In a state in which the key cap 723 is assembled or coupled to the body portion 721, the locking step 721a may tightly contact the binding rib 723a. In an embodiment, the body portion 721 and/or the locking step 721a may be formed of an elastic material such as silicone or rubber, thereby accumulating an elastic force in a state of being in tight contact with the binding rib 723a. For example, the key cap 723 may be firmly fixed to the body portion 721 by the key plate 523a being supported on an outer circumferential surface of the body portion 721 and the binding rib 723a being supported on the locking step 721a.

According to an embodiment, in a structure in which the locking step 721a is supported on the binding rib 723a, an inner diameter of the operation hole 521c at a position where the locking step 721a is formed may be smaller than an outer diameter of the binding rib 723a. For example, in the binding rib 723a entering further inside the body portion 721 than the locking step 721a, it may be assembled by interference fit. In an embodiment, the body portion 721 and/or the locking step 721a may be formed of an elastic material to be deformable or restorable, thereby allowing the binding rib 723a to enter the inner side of the body portion 721, and in a state in which the binding rib 723a has entered the inner side of the body portion 721, it may be restored to a design shape or manufactured shape to support the binding rib 723a.

According to an embodiment, the key assembly 702 may not include the interference member 525 of FIG. 7 or FIG. 18. For example, the second dummy recess 623g may be disposed inside the housing 401 or the side member 411 (e.g., the housing 401 or the side member 411 of FIG. 5), and a fixing member 729 (e.g., the fixing member 729 of FIGS. 47 to 50) not illustrated may be coupled to the second dummy recess 623g to couple or confine the key assembly 702 to the housing 401 or the side member 411. In an embodiment, the fixing member 729 may be understood to be included in the key assembly 702. In an embodiment, when the key assembly 602 is utilized as an electrode for measuring a biometric signal, the fixing member 729 may at least partially include an electrically insulating material. For example, the fixing member 729 may couple or confine the key assembly 602 to the housing 401 but electrically insulate the key cap or the operation rod with respect to the side member 411.

According to an embodiment, the key assembly 602 of FIG. 28 and/or the key assembly 702 of FIG. 39 may further include the coil spring 529b, the washer 529a, and/or the O-ring 527b of FIG. 7. For example, when no external force acts, the elastic force of the coil spring 529b may act to maintain the key assembly 602, 702 at a designated position on the side member 411 (e.g., the side member 411 of FIG. 7). The O-ring 527b may, e.g., suppress moisture or foreign objects from being introduced through a gap between the side member 411 and the key assembly 602, 702. In an embodiment, the key assembly 602 of FIG. 28 and/or the key assembly 702 of FIG. 39 may not include the coil spring 529b and/or the washer 529a of FIG. 7. For example, when the body portion 621, 721 is formed of an elastic material, the coil spring 529b and/or the washer 529a of FIG. 7 may be omitted, and the key assembly 602, 702 may be maintained at a designated position on the side member 411 (e.g., the side member 411 of FIG. 7) by the elastic force of the body portion 721.

FIG. 43 is a plan view illustrating the body portion 721 of the key assembly 702 (e.g., the key assembly 402 of FIG. 7) of the electronic device according to an embodiment of the disclosure. FIG. 44 is a perspective view illustrating the body portion 721 of the key assembly 702 of the electronic device according to an embodiment of the disclosure.

With further reference to FIGS. 43 and 44, the body portion 721 of the key assembly 702 may include protrusions 621b formed on a surface facing the key cap 723, and an operation hole 521c formed in an area between the protrusions 621b. The protrusions 621b may, e.g., be accommodated in a portion of the key cap 723 to stably couple the body portion 721 and the key cap 723. In an embodiment, an adhesive may be provided in an area or space between the body portion 721 and the key cap 723 to firmly fix the body portion 721 and the key cap 723. In an embodiment, when including the protrusions 621b, the body portion 721 may be formed of an elastic material such as silicone or rubber. In an embodiment, when viewed in the plan view illustrating FIG. 43, the operation hole 521c may be generally circular in shape, and the locking step 721a of FIG. 42 may be provided on an inner wall of the operation hole 521c. The locking step 721a may be formed to substantially have a closed curve trajectory.

FIG. 45 is a perspective view illustrating the key cap 723 of the key assembly 702 (e.g., the key assembly 402 of FIG. 7) of the electronic device according to an embodiment of the disclosure. FIG. 46 is a side view illustrating the key cap 723 of the key assembly 702 of the electronic device according to an embodiment of the disclosure.

With further reference to FIGS. 45 to 46, the key cap 723 may include a key plate 523a and an operation rod 523c. In an embodiment, the key plate 523a may further include recessed portions 623b provided on a surface facing the body portion 721. The recessed portions 623b may be configured to receive, e.g., any one of the protrusions 621b of the body portion 721. For example, the key cap 723 and the body portion 721 may be firmly fixed to each other by the protrusions 621b and the recessed portions 623b engaging with each other. In an embodiment, an adhesive further provided between the key cap 723 and the body portion 721 may fix the protrusions 621b to a lower surface or a side wall of the recessed portion(s) 623b.

According to an embodiment, the binding rib 723a may be understood to extend from an outer circumferential surface of the operation rod 523c between the first dummy recess 523f and the key plate 523a. In an embodiment, the binding rib 723a may be provided to have a closed curve trajectory extending along a circumferential direction of the operation rod 523c. However, the embodiment(s) of the disclosure is/are not limited thereto, and the binding rib 723a may be provided with a trajectory similar to or substantially the same as the second binding rib 623a of FIG. 33. For example, an embodiment in which a plurality of binding ribs 723a are disposed along a circumferential direction of the operation rod 523c may be implemented. In an embodiment, the plurality of binding ribs 723a may be disposed at equal angular intervals along a circumferential direction of the operation rod 523c.

FIG. 47 is a plan view illustrating a state in which the key assembly 702 (e.g., the key assembly 402 of FIG. 7) of the electronic device is disposed in the housing 401 or the side member 411 according to an embodiment of the disclosure. FIG. 48 is a perspective view illustrating a state in which the key assembly 702 of the electronic device is disposed in the housing 401 or the side member 411 according to an embodiment of the disclosure.

Referring to FIGS. 47 and 48, the key assembly 702 (e.g., the key assembly 402, 602, 702 of FIG. 7, FIG. 28, and/or FIG. 39) may be substantially coupled from an outer surface of the side member 411 but may position an end of the operation rod 523c in an inner space of the side member 411. In an embodiment, the key assembly 702 and/or the electronic device 400 of FIG. 5 may further include a fixing member 729 coupled to the operation rod 523c on the inner side of the side member 411. When further including the fixing member 729, the interference member(s) 525 of FIG. 7 may be omitted. For example, the key assembly 402 may be suppressed from being separated from the side member 411 by the fixing member 729 being supported on an inner surface of the side member 411 inside the housing 401, and, e.g., the interference member(s) 525 of FIG. 7 may be omitted. In an embodiment, the key assembly 402 including the interference member(s) 525 of FIG. 7 may be stably disposed or assembled in the side member 411 even without including the fixing member 729. In a state disposed on the side member 411, the key assembly 402 may function as a button for operating the switch member 473a (e.g., the switch member 473a of FIG. 7) or an electrode for detecting a biometric signal of the user.

FIG. 49 is a first perspective view illustrating the fixing member 729 of the key assembly 702 (e.g., the key assembly 402 of FIG. 7) of the electronic device according to an embodiment of the disclosure. FIG. 50 is a second perspective view illustrating the fixing member 729 of the key assembly 702 of the electronic device according to an embodiment of the disclosure.

With further reference to FIGS. 49 and 50, the fixing member 729 may include a first slit 729b that receives a portion of the operation rod 523c. The first slit 729b may extend, e.g., from an edge of the fixing member 729 toward an inner side of the fixing member 729. In an embodiment, when the fixing member 729 is disposed on the side member 411, the first slit 729b may be understood to be aligned in a direction crossing a length direction of the key cap 723 (or the key plate 523a). In an embodiment, the first slit 729b may be understood to extend from an edge of the fixing member 729 to the inner side along a direction crossing the length direction of the key cap 723 (or the key plate 523a). In an embodiment, the fixing member 729 may include a fixing plate 729a providing the first slit 729b, and at least one support plate 729c bent at an edge of the fixing plate 729a. For example, the first slit 729b may be understood to extend from an edge of the fixing plate 729a, and the at least one support plate 729c may be implemented inclined or perpendicular to the fixing plate 729a.

According to an embodiment, an inner diameter or width of the first slit 729b may be greater than a smallest outer diameter on the second dummy recess 623g and smaller than an outer diameter of the operation rod 523c. For example, the fixing member 729 may be assembled to the operation rod 523c while a portion of the operation rod 523c at a position where the second dummy recess 623g is formed is accommodated in the first slit 729b. In a state in which the fixing member 729 is coupled to the operation rod 523c, the fixing member 729, e.g., the fixing plate 729a, may contact or tightly contact an inner surface of the side member 411 by an elastic force provided by the coil spring 529b of FIG. 7 or the body portion 721 of FIG. 44.

According to an embodiment, when the fixing plate 729a contacts the inner surface of the side member 411, the support plate 729c may contact another surface of the side member 411, e.g., an upper surface (or a lower surface) different from the inner surface. For example, the fixing member 729 may be disposed on the side member 411 by the fixing plate 729a being coupled to the operation rod 523c and being in contact with the inner surface of the side member 411, and the support plate 729c being disposed inclined or perpendicular to the fixing plate 729a and being in contact with the side member 411. In an embodiment, when the key assembly 402 moves on the side member 411 due to operation by the user, the fixing member 729 (e.g., the fixing plate 729a) may be temporarily spaced apart from the side member 411.

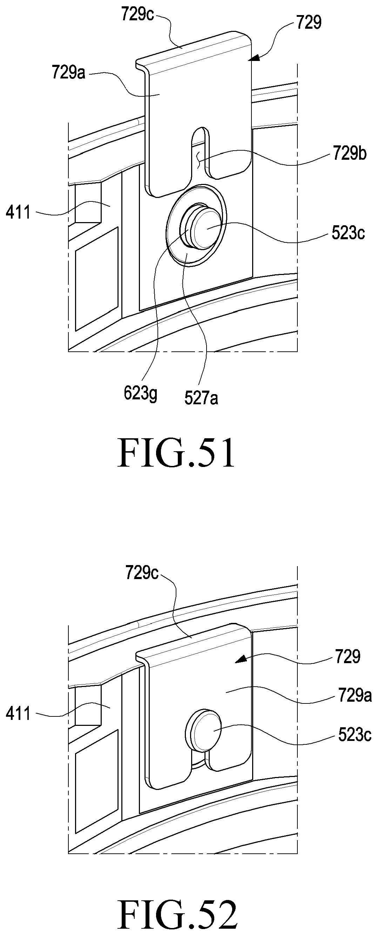

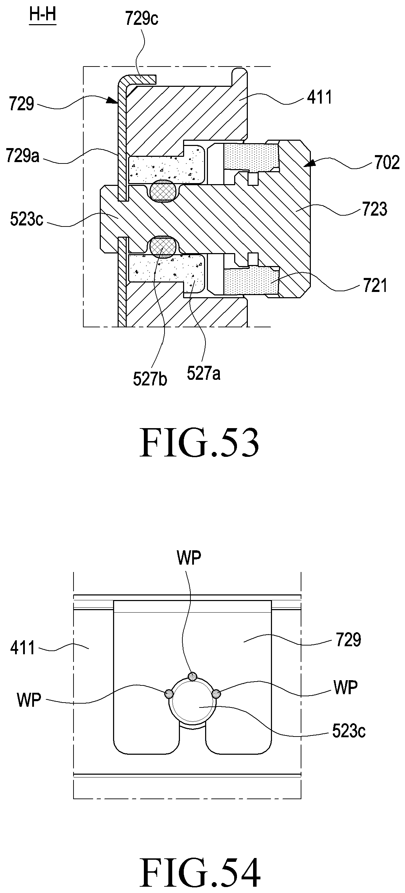

FIG. 51 is a view illustrating an operation in which the fixing member 729 of the key assembly (e.g., the key assembly 702 of FIG. 39) of the electronic device is assembled according to an embodiment of the disclosure. FIG. 52 is a view illustrating a state in which the fixing member 729 of the key assembly 702 of the electronic device is assembled according to an embodiment of the disclosure. FIG. 53 is a view illustrating a state in which the fixing member 729 of the key assembly 702 of the electronic device is assembled according to an embodiment of the disclosure, and illustrates the electronic device cut along line H-H of FIG. 47.

Referring to FIGS. 51 to 53, in a state in which the operation rod 523c protrudes to the inner side of the side member 411, the fixing member 729 may be coupled to the operation rod 523c. For example, the fixing member 729 may be coupled to the operation rod 523c by moving in a direction of inserting the operation rod 523c into the first slit 729b at a position where the second dummy recess 623g is formed. While the operation rod 523c enters the first slit 729b, the fixing plate 729a may rub against the side member 411.

According to an embodiment, a position where the at least one support plate 729c contacts an upper surface (or a lower surface) of the side member 411 may be substantially an assembly position of the fixing member 729. For example, at a position where the operation rod 523c is sufficiently inserted into the first slit 729b or at a position where the operation rod 523c is substantially coupled to the fixing member 729, the at least one support plate 729c may contact the side member 411.

According to an embodiment, the guide tube 527a (e.g., the guide tube 527a of FIG. 7) may be provided in the side member 411. For example, the operation rod 523c may penetrate the guide tube 527a and enter the inner side of the side member 411. In an embodiment, the O-ring 527b disposed on the operation rod 523c may substantially close a gap between the operation rod 523c and the guide tube 527a, thereby suppressing or preventing moisture or foreign objects from being introduced to the inner side of the side member 411.

According to an embodiment, in a structure in which the coil spring 529b of FIG. 7 is omitted, the body portion 721 of the key assembly 402 may contact or be supported on the side member 411 (or the guide tube 527a). For example, the body portion 721 may provide an elastic force in a direction of protruding the key assembly 402 toward the outside of the side member 411, and the key assembly 402 may be suppressed or prevented from being separated from the side member 411 by the fixing member 729 being supported on an inner surface of the side member 411. In an embodiment, even when the body portion 721 is formed of an elastic material, the key assembly 402 may include the coil spring 529b of FIG. 7. For example, the elastic force of the body portion 721 and the elastic force of the coil spring 529b may be combined to maintain or support the key assembly 402 at a designated position on the side member 411.

FIG. 54 is a view illustrating a state in which the fixing member 729 of the key assembly (e.g., the key assembly 702 of FIG. 39) of the electronic device is assembled according to an embodiment of the disclosure.

Referring to FIG. 54, the electronic device and/or the key assembly 702 may include at least one welding mark WP. In an embodiment, the 'welding mark WP' may be, e.g., a mark formed by welding at least one point in coupling the fixing member 729 to the operation rod 523c. For example, the fixing member 729 may be substantially fixed to the operation rod 523c by welding. In an embodiment, the number or shape (e.g., area or trajectory) of the welding mark WP may be variously implemented considering an area (or space) allowed on the key assembly 402 and/or a binding force between the fixing member 729 and the operation rod 523c.

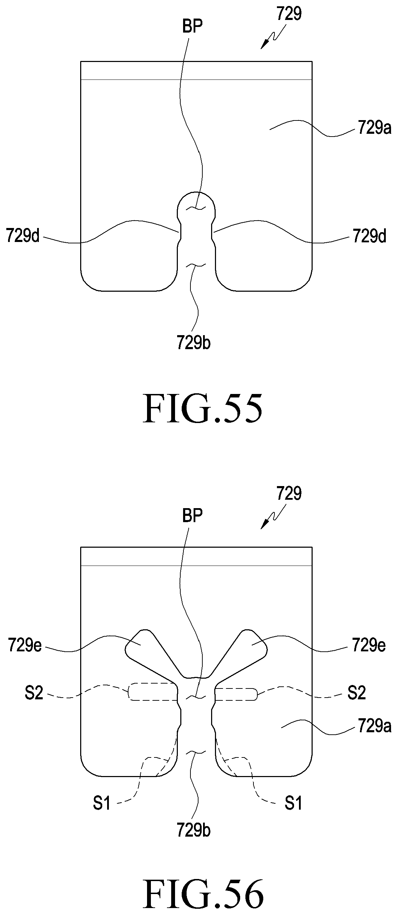

FIG. 55 is a view illustrating the fixing member 729 of the key assembly (e.g., the key assembly 702 of FIG. 39) of the electronic device according to an embodiment of the disclosure. FIG. 56 is a view illustrating the fixing member 729 of the key assembly 702 of the electronic device according to an embodiment of the disclosure.

First, referring to FIG. 55, the fixing member 729 may further include a support rib(s) 729d protruding (or extending) from an edge of the first slit 729b toward the inner side of the first slit 729b. In FIG. 55, the portion indicated by the reference numeral 'BP' is a portion of the first slit 729b, which may illustrate an area where the operation rod 523c is positioned in a state in which the fixing member 729 is coupled to the operation rod 523c. For example, a width of the first slit 729b at a portion where the support rib(s) 729d is provided may be smaller than a smallest outer diameter of the operation rod 523c at a portion where the second dummy recess 623g is provided. For example, the support rib(s) 729d may substantially support the operation rod 523c to fix the operation rod 523c in the first slit 729b or the area indicated by 'BP'. In an embodiment, while the operation rod 523c passes through a section where the support rib(s) 729d is provided, the fixing member 729 (e.g., the fixing plate 729a) may be temporarily deformed and the operation rod 523c may enter the area indicated by 'BP'. In an embodiment, after the operation rod 523c enters the area indicated by 'BP', the fixing member 729 (e.g., the fixing plate 729a) may be restored to a design shape or manufactured shape.

Referring to FIG. 56, the fixing member 729, e.g., the fixing plate 729a, may further include at least one second slit 729e extending from the first slit 729b on the inner side of the fixing member 729. In the illustrated embodiment, a configuration in which two second slits 729e are provided is illustrated, but it should be noted that the embodiment(s) of the disclosure is/are not limited thereto. For example, three or more second slits 729e having a smaller width than in the illustrated embodiment may be formed. Earlier, it was mentioned that the fixing member 729 is temporarily deformed when the operation rod 523c passes through a section where the support rib(s) 729d is formed. The second slit(s) 729e may, e.g., increase the flexibility of the fixing member 729 to facilitate deformation of the fixing member 729 in an operation in which the operation rod 523c enters the first slit 729b, and/or may promote restoration of the fixing member 729 in a state in which the operation rod 523c is positioned in the area indicated by 'BP'.

According to an embodiment, the reference numeral 'S1' of FIG. 56 may illustrate a modified shape of the first slit 729b. For example, the first slit 729b may have a largest width at an edge of the fixing member 729, and may illustrate a shape in which the width gradually decreases as it gets closer to the area indicated by 'BP'. In an embodiment, the shape of the first slit 729b in which the width gradually changes may facilitate the operation rod 523c entering the first slit 729b. In an embodiment, the reference numeral 'S2' of FIG. 56 may illustrate a modified shape or position of the second slit 729e. As described above, the number, position, and/or shape of the second slit 729e may be variously implemented considering mechanical stability of the fixing member 729 or assemblability of the operation rod 523c.

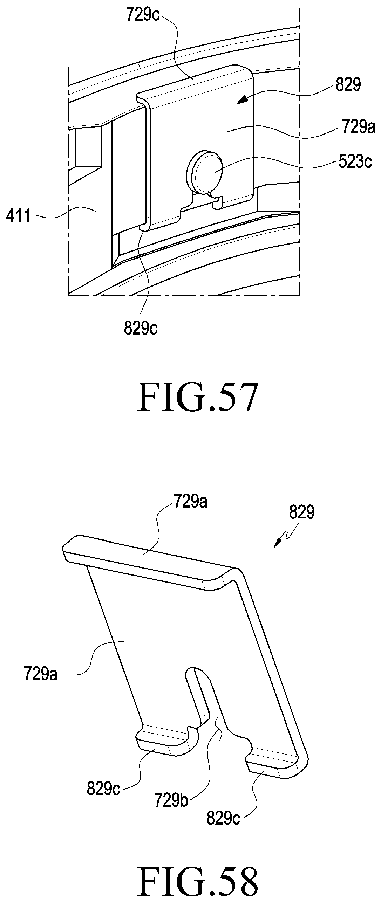

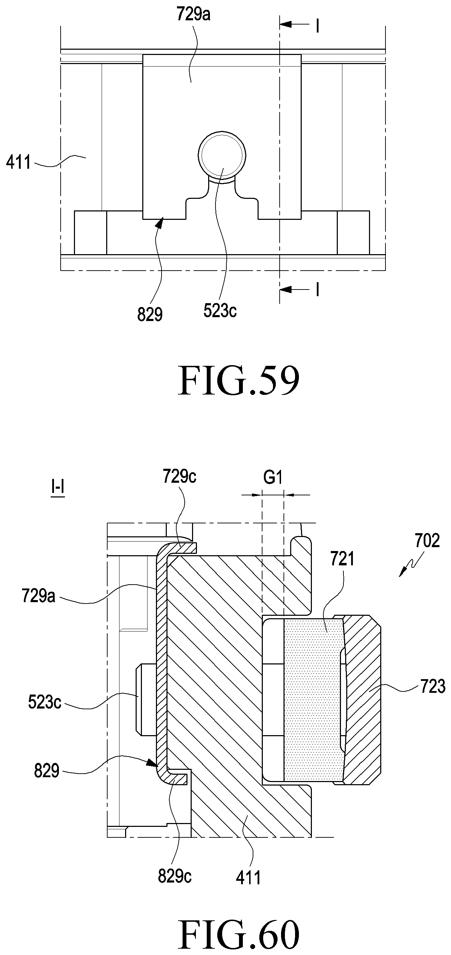

FIG. 57 is a view illustrating a state in which a fixing member 829 of the key assembly (e.g., the key assembly 702 of FIG. 39) of the electronic device is assembled according to an embodiment of the disclosure. FIG. 58 is a view illustrating the fixing member 829 of the key assembly 702 of the electronic device according to an embodiment of the disclosure. FIG. 59 is a view illustrating a state in which the fixing member 829 of the key assembly 702 of the electronic device is assembled according to an embodiment of the disclosure. FIG. 60 is a view illustrating a state in which the fixing member 829 of the key assembly 702 of the electronic device is assembled according to an embodiment of the disclosure, and illustrates the electronic device cut along line I-I of FIG. 59.

Referring to FIGS. 57 to 60, the fixing member 829 may include support plates 729c, 829c provided at two opposite ends of the fixing plate 729a. For example, the fixing member 829 may include a first support plate 729c bent at one edge of the fixing plate 729a, and second support plates 829c bent at the other edge of the fixing plate 729a. In an embodiment, the first support plate 729c may be substantially the same as the support plate 729c of FIG. 49. In an embodiment, when a plurality of second support plates 829c is provided at the other edge of the fixing plate 729a, the first slit 729b may be understood to extend from an area between the second support plates 829c to the inner side of the fixing plate 729a. In an embodiment, the support plates 729c, 829c may be understood to be disposed inclined or perpendicular to the fixing plate 729a.

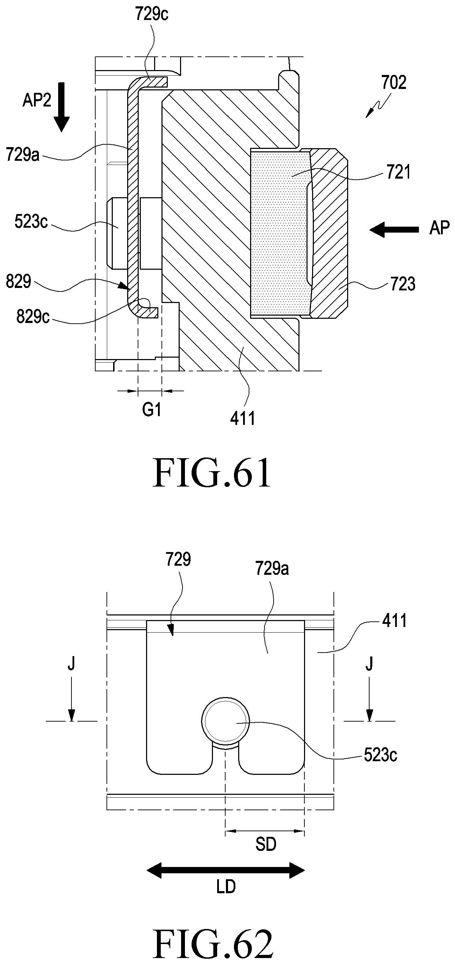

According to an embodiment, when the key assembly 402 is disposed in the side member 411, the fixing plate 729a may be disposed in contact with an inner surface of the side member 411, and the support plates 729c, 829c may contact the side member 411 at a surface (e.g., an upper surface or a lower surface of the side member 411) different from the inner surface of the side member 411. For example, when the first support plate 729c is defined as being in contact with an upper surface of the side member 411, the second support plates 829c may be configured to contact a lower surface of the side member 411. When including the support plates 729c, 829c, the fixing member 829 may be assembled to the operation rod 523c in a state in which the key assembly 402 is sufficiently moved to the inner side of the side member 411 by an external force. A position or distance by which the key assembly 702 moves on the side member 411 to assemble the fixing member 829 may be greater than a length (or height) of the support plates 729c, 829c measured in a direction perpendicular to one surface of the fixing plate 729a. An operation in which the fixing member 729 of FIG. 58 is coupled to the operation rod 523c is examined with further reference to FIG. 61.

FIG. 61 is a view illustrating an operation in which the fixing member 729 of the key assembly (e.g., the key assembly 702 of FIG. 39) of the electronic device is assembled according to an embodiment of the disclosure.

According to an embodiment, a portion of the inner surface of the body portion 721 may directly contact the side member 411, and another portion of the inner surface of the body portion 721 may not directly contact the side member 411. For example, the key assembly 402 may be disposed on the side member 411 in a state in which a first gap indicated by 'G1' in FIG. 60 is maintained between the side member 411 and the inner surface of the body portion 721. The first gap G1 may illustrate, e.g., a distance or section by which the key assembly 402 moves on the side member 411 when the user intends to operate the switch member (e.g., the switch member 473a of FIG. 7).

According to an embodiment, when the fixing member 829 includes the first support plate 729c and the second support plates 829c and the first slit 729b is disposed in an area between the second support plates 829c, the second support plates 829c or the first support plate 729c may interfere with an upper surface or a lower surface of the side member 411, making it difficult to assemble the fixing member 729 to the operation rod 523c in the manner of FIG. 51 or FIG. 52. With further reference to FIG. 61, the fixing member 829 may be assembled to the operation rod 523c in a state in which the key assembly 402 is pressed in a direction indicated by 'AP'. For example, when the key assembly 402 moves further toward the inner side of the side member 411 by the first gap G1 from the state illustrated in FIG. 60, the second dummy recess 623g is spaced apart from the side member 411 by the first gap G1 as illustrated in FIG. 61, and the fixing member 729 may move in a direction indicated by 'AP1' to cause the operation rod 523c to enter the inner side of the first slit 729b. While the second dummy recess 623g maintains a state of being spaced apart from the side member 411 by the first gap G1, the second support plates 829c may move across the inner surface of the side member 411 along the direction indicated by 'AP1' (e.g., a direction from an upper portion to a lower portion of the side member 411) without interfering with the side member 411. Accordingly, the fixing member 729 may easily be assembled with the operation rod 523c while including the support plates 729c, 829c provided at two opposite ends of the fixing plate 729a.

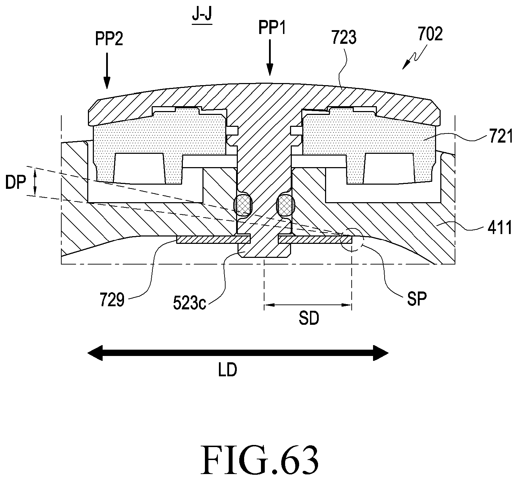

FIG. 62 is a view illustrating a state in which the fixing member 729 of the key assembly (e.g., the key assembly 702 of FIG. 39) of the electronic device is assembled according to an embodiment of the disclosure. FIG. 63 is a view illustrating a support structure of the fixing member 729 of the key assembly 702 of the electronic device according to an embodiment of the disclosure.

With further reference to FIGS. 62 and 63, when disposed in the side member 411, a distance measured along a length direction LD of the key cap 723 from the operation rod 523c to an edge of the fixing member 729 may be greater than a diameter of the operation rod 523c (or a width of the operation rod 523c). When the operation rod 523c is not circular, the width of the operation rod 523c may refer to a width measured along the length direction LD of the key cap 723. In FIGS. 62 and 63, the distance (e.g., the distance indicated by 'SD') from the operation rod 523c to an edge of the fixing member 729 may illustrate, e.g., a distance from a radial center of the operation rod 523c to an edge of the fixing member 729. In an embodiment, when measured along the length direction LD of the key cap 723, a distance from the radial center of the operation rod 523c to an edge of the fixing member 729 may be about 1.5 times or more the diameter of the operation rod 523c.

According to an embodiment, when the fixing member 729 has a width (or length) greater than a diameter of the operation rod 523c in the length direction LD of the key cap 723, operation of the switch member 473a using the key assembly 402 may be stable. For example, the fixing member 729 may support an operation of operating the switch member 473a while suppressing (or preventing) the key assembly 402 from being separated from the side member 411. In an embodiment, to operate the switch member 473a, the user may press the key assembly 402 at a point illustrated as 'PP1' or 'PP2' in FIG. 63, for example. For example, when the user presses the key assembly 402 at 'PP1' closer to the operation rod 523c, the switch member 473a may be stably operated.

According to an embodiment, since the point indicated as 'PP2' is at a position offset from the operation rod 523c, the operation rod 523c may not move as much as the user intends. In an embodiment, when the fixing member 729 has a width of about 3 times or more the diameter of the operation rod 523c in the length direction of the key cap 723, the switch member 473a may be more stably operated even when a point where the user contacts the key cap 723 is somewhat offset from the operation rod 523c. Here, the 'width of the fixing member 729' may be about twice the distance indicated by 'SD' in FIGS. 62 and/or 63. For example, when the fixing member 729 has a considerably large width (e.g., about 3 times or more the diameter of the operation rod 523c) compared to the diameter of the operation rod 523c, an environment in which the operation rod 523c may operate the switch member 473a may be provided while a portion of an edge of the fixing member 729 (e.g., a point indicated by 'SP') is supported on the side member 411. In an embodiment, the larger the width of the fixing member 729, the more stable such a support structure of the fixing member 729 or an operation of operating the switch member 473a using the key assembly 402 may be.

According to an embodiment, when an external force is applied at the point indicated as 'PP2', a displacement DP of the key assembly 702 may be largest at the point indicated as 'PP2' and smallest at the point indicated as 'SP'. In an embodiment, when an external force is applied at the point indicated as 'PP2', a displacement of the operation rod 523c may be smaller than a displacement of the point indicated as 'PP2' and larger than a displacement of the point indicated as 'SP'. In an embodiment, a displacement (e.g., a displacement of the operation rod 523c) sufficient to operate the switch member (e.g., the switch member 473a of FIG. 7) may be secured by appropriately selecting a position of the operation rod 523c on the key assembly 702 (e.g., the key cap 723) and/or a width of the fixing member 729 (e.g., the distance indicated by 'SD'). In an embodiment, the farther the distance from the point indicated as 'SP' to the operation rod 523c, the more easily the displacement for operating the switch member may be secured.

According to an embodiment, the interference member(s) 525 of FIG. 7 may be disposed substantially at two opposite ends in the length direction LD of the key assembly 402, and may suppress or prevent the key assembly 402 from being separated from the side member 411 by interfering with the side member 411. In an embodiment, the interference member(s) 525 may be understood as a structure that is a portion of the key assembly 402 and is disposed farthest from the operation rod 523c in the length direction of the key cap 723. For example, even when the user operates the key assembly 402 at a position (e.g., the position indicated as 'PP2' in FIG. 63) offset from the operation rod 523c, the interference member(s) 525 may provide an environment for stably operating the switch member 473a. For example, when the key assembly 402 includes the interference member(s) 525, the interference member(s) 525 may be supported on (or interfere with) the side member 411 at a position farther than the distance illustrated as 'SD' in FIG. 63, so that an operation of operating the switch member 473a may be stable regardless of the user's pressing position. In an embodiment, when the key assembly 402 includes the interference member(s) 525, the fixing member 729 may be omitted.

As described above, the key assembly (e.g., the key assembly 402, 602, 702 of FIG. 5, FIG. 7, FIG. 28, and/or FIG. 39) and/or the electronic device (e.g., the electronic device 101 of FIG. 1 and/or the electronic device 101, 400 of FIGS. 2 to 6) including the same according to an embodiment of the disclosure may stabilize an input operation through a switch member (e.g., the switch member 473a of FIG. 5 or FIG. 7) by including the interference member(s) (e.g., the interference member 525 of FIG. 7). In an embodiment, the interference member(s) may function as a structure that stabilizes the input operation and prevents the key assembly from being separated, thereby simplifying a structure of the key assembly or an assembly structure of the key assembly on the electronic device. In an embodiment, as the input operation is stabilized, the key assembly may be designed or manufactured in a size that is easy for the user to visually or tactilely recognize. In an embodiment, since the key assembly may provide a sufficient area for the user to contact, user biometric information (e.g., heart rate or electrocardiogram) detection may be easy, and accuracy of the detected biometric information may be enhanced.

Effects that may be obtained in the disclosure are not limited to the effects mentioned above, and other effects not mentioned may be clearly understood by those skilled in the art to which the disclosure belongs from the description of the above-described embodiment(s).

According to an embodiment of the disclosure, an electronic device (e.g., the electronic device 101 of FIG. 1 and/or the electronic device 101, 400 of FIGS. 2 to 6) may include a housing (e.g., the housing 401 of FIGS. 5 to 7) including a first accommodation space (e.g., the first accommodation space 511a of FIG. 7) extending along a first direction (e.g., the first direction D1 of FIG. 7) from an outer surface of a side member (e.g., the side member 411 of FIGS. 5 to 7) toward an inner side of the side member 411, and at least one second accommodation space 511b extending from an inner wall of the first accommodation space 511a in a second direction (e.g., the second direction D2 of FIG. 7) crossing the first direction D1 at a position spaced apart from the outer surface of the side member 411, and a key assembly (e.g., the key assembly 402, 602, 702 of FIG. 5, FIG. 7, FIG. 28, and/or FIG. 39) at least partially accommodated in the first accommodation space 511a and the second accommodation space 511b. In an embodiment, the key assembly 402, 602, 702 may include a body portion (e.g., the body portion 521 of FIG. 7, FIG. 9, or FIG. 10) at least partially disposed in the first accommodation space 511a and including at least one first binding hole (e.g., the first binding hole 521a of FIG. 9 or FIG. 10) extending from an outer surface and at least one second binding hole (e.g., the second binding hole 521b of FIG. 9 or FIG. 10) extending from an inner surface, a key cap (e.g., the key cap 523 of FIG. 7, FIG. 11, or FIG. 12) coupled to the outer surface of the body portion 721 by including a first binding hook (e.g., the first binding hook 523b of FIG. 7, FIG. 11, or FIG. 12) engaged with the at least one first binding hole 521a, and an interference member (e.g., the interference member 525 of FIG. 7, FIG. 18, or FIG. 19) coupled to the inner surface of the body portion 721 by including a second binding hook (e.g., the second binding hook 525b of FIG. 18 or FIG. 19) engaged with the at least one second binding hole 521b and at least partially accommodated in the second accommodation space 511b.

According to an embodiment, the interference member 525 may be disposed within the second accommodation space 511b and may reciprocate along the first direction D1.

According to an embodiment, the body portion 721 may have a first modulus of elasticity, and the key cap 723 or the interference member 525 may have a second modulus of elasticity greater than the first modulus of elasticity.

According to an embodiment, the at least one first binding hole 521a or the at least one second binding hole 521b may extend parallel to the first direction D1 or extend inclined with respect to the first direction D1.

According to an embodiment, the key cap 723 may include an electrically conductive material.

According to an embodiment, the key assembly 402 may further include a first binding protrusion (e.g., the first binding protrusion 521e of FIG. 17) formed on one of an inner wall of the at least one first binding hole 521a and an outer circumferential surface of the first binding hook 523b, and a first binding recess (e.g., the first binding recess 523e of FIG. 17) formed on the other one of the inner wall of the at least one first binding hole 521a and the outer circumferential surface of the first binding hook 523b. In an embodiment, the key cap 723 may be fixed to the body portion 721 by the first binding protrusion 521e engaging with the first binding recess 523e.

According to an embodiment, the key assembly 402 may further include a second binding protrusion (e.g., the second binding protrusion 521f of FIG. 18 or FIG. 19) formed on one of an inner wall of the at least one second binding hole 521b and an outer circumferential surface of the second binding hook 525b, and a second binding recess (e.g., the second binding recess 525c of FIG. 26) formed on the other one of the inner wall of the at least one second binding hole 521b and the outer circumferential surface of the second binding hook 525b. In an embodiment, the interference member 525 may be fixed to the body portion 721 by the second binding protrusion 521f engaging with the second binding recess 525c.

According to an embodiment, the key assembly 402 may further include an operation rod (e.g., the operation rod 523c of FIG. 7, FIG. 11, or FIG. 12) extending from an inner surface of the key cap 723 and protruding from an inner surface of the body portion 721.

According to an embodiment, the key assembly 402 may further include a guide tube (e.g., the guide tube 527a of FIG. 6 or FIG. 7) coupled to the side member 411, and an O-ring (e.g., the O-ring 527b of FIG. 7, FIG. 13, or FIG. 14) coupled to surround at least a portion of an outer circumferential surface of the operation rod 523c. In an embodiment, the operation rod 523c may be disposed to penetrate the guide tube 527a, and the O-ring 527b may contact the guide tube 527a.

According to an embodiment, the key assembly 402 may further include a dummy recess (e.g., the dummy recess 523f of FIG. 11 or FIG. 12) formed on an outer circumferential surface of the operation rod 523c. In an embodiment, at least a portion of the O-ring 527b may be accommodated in the dummy recess.

According to an embodiment, the key assembly 402 may further include a washer (e.g., the washer 529a of FIG. 7, FIG. 13, or FIG. 14) disposed around the operation rod 523c, and a coil spring (e.g., the coil spring 529b of FIG. 7, FIG. 13, or FIG. 14) having one end supported on the washer 529a and the other end supported on an inner surface of the key cap 723.

According to an embodiment, the key assembly 402 may further include an alignment protrusion (e.g., the alignment protrusion 521d of FIG. 7 or FIG. 9) protruding from one of an outer surface of the body portion 721 and an inner surface of the key cap 723, and an alignment recess (e.g., the alignment recess 523d of FIG. 11 or FIG. 12) provided on one side of the operation rod 523c on the other one of the outer surface of the body portion 721 and the inner surface of the key cap 723 and configured to receive at least a portion of the alignment protrusion 521d.

According to an embodiment, the electronic device described above may further include a switch member (e.g., the switch member 473a of FIG. 5 or FIG. 7) disposed inside the housing 401 and aligned to face the operation rod 523c.

According to an embodiment, the key assembly 402 may further include an inclined surface or a curved surface (e.g., the inclined surface or the curved surface CS of FIG. 10) connecting an inner wall of the at least one second binding hole 521b and the inner surface of the body portion 721.

According to an embodiment of the disclosure, an electronic device (e.g., the electronic device 101 of FIG. 1 and/or the electronic device 101, 400 of FIGS. 2 to 6) may include a housing (e.g., the housing 401 of FIGS. 5 to 7) including an accommodation space (e.g., the accommodation space 511a, 511b of FIG. 7) extending along a direction from an outer surface of a side member (e.g., the side member 411 of FIGS. 5 to 7) toward an inner side of the side member 411, and a key assembly (e.g., the key assembly 402, 602, 702 of FIG. 5, FIG. 7, FIG. 28, and/or FIG. 39) at least partially accommodated in the accommodation space. In an embodiment, the key assembly 402 may include a body portion (e.g., the body portion 621, 721 of FIG. 28 and/or FIG. 39) at least partially disposed in the accommodation space, a key cap (e.g., the key cap 623, 723 of FIG. 28 and/or FIG. 39) coupled to an outer surface of the body portion 721, the key cap 723 including an operation rod (e.g., the operation rod 523c of FIG. 7, FIG. 11, or FIG. 12) extending from an inner surface and protruding from an inner surface of the body portion 721, and a fixing member (e.g., the fixing member 729 of FIG. 48) coupled to the operation rod 523c and supported on an inner surface of the side member 411. In an embodiment, a distance (e.g., the distance indicated by 'SD' in FIG. 62 or FIG. 63) measured in a length direction (e.g., the direction indicated by 'LD' in FIG. 62 or FIG. 63) of the key cap 723 from the operation rod 523c to an edge of the fixing member 729 may be greater than a diameter of the operation rod 523c or a width of the operation rod 523c measured in the length direction of the key cap 723.

According to an embodiment, the fixing member 729 may provide a first slit (e.g., the first slit 729b of FIG. 49 or FIG. 50) extending from an edge toward an inner side in a direction crossing the length direction of the key cap 723. In an embodiment, a portion of the operation rod 523c may be accommodated in the first slit 729b.

According to an embodiment, the fixing member 729 may include a fixing plate (e.g., the fixing plate 729a of FIG. 49 or FIG. 50) configured to contact an inner surface of the side member 411, and at least one support plate (e.g., the support plate 729c, 829c of FIG. 49, FIG. 50, or FIG. 58) bent at an edge of the fixing plate 729a. In an embodiment, the at least one support plate may be configured to contact a surface of the side member 411 in an area different from the inner surface of the side member 411.

According to an embodiment, the key cap 723 may include an electrically conductive material.

According to an embodiment, the key assembly 402 may further include a guide tube (e.g., the guide tube 527a of FIG. 6 or FIG. 7) coupled to the side member 411. In an embodiment, the operation rod 523c may be disposed to penetrate the guide tube 527a, and in this case, the guide tube 527a may be configured to electrically insulate the operation rod 523c with respect to the side member 411.

According to an embodiment, the key assembly 402 may further include a dummy recess (e.g., the dummy recess 523f of FIG. 11 or FIG. 12) formed on an outer circumferential surface of the operation rod 523c, and an O-ring (e.g., the O-ring 527b of FIG. 7, FIG. 13, or FIG. 14) at least partially accommodated in the dummy recess and configured to contact an inner surface of the guide tube 527a.

Although the disclosure has been illustrated and described with reference to an embodiment, it should be understood that the embodiment is for illustration and not for limiting the disclosure. It is apparent to those skilled in the art that various changes in form and detailed configuration may be made without departing from the overall scope of the disclosure, including the appended claims and their equivalents. For example, a key assembly (e.g., the key assembly 702 of FIG. 47) may include a body portion 721 and a key cap 723 formed of a metal or electrically conductive material. In this case, the body portion 721 and the key cap 723 may be implemented as a single pieced body. In an embodiment, when the body portion 721 and the key cap 723 are implemented as a single body having electrical conductivity, the fixing member 729 and/or the guide tube 527a may electrically insulate the body portion 721 and the key cap 723 with respect to the side member 411. In an embodiment, at least one of the body portion 721 and the key cap 723 may be formed of an electrically conductive material, and the side member 411 may be implemented with an electrically insulating material.

## Claims

1. An electronic device (101; 400), comprising:
a housing (401) including a first accommodation space (511a) extending in a first direction (D1) from an outer surface of a side member (411) toward an inside of the side member (411), and at least one second accommodation space (511b) extending in a second direction (D2) crossing the first direction (D1) from an inner wall of the first accommodation space (511a) at a position spaced apart from the outer surface of the side member (411); and
a key assembly (402; 602; 702) at least partially accommodated in the first accommodation space (511a) and the second accommodation space (511b),
wherein the key assembly (402; 602; 702) includes,
a body portion (521; 621; 721) at least partially disposed in the first accommodation space (511a), and including at least one first binding hole (521a) extending from an outer surface and at least one second binding hole (521b) extending from an inner surface;
a key cap (523; 623; 723) coupled to the outer surface of the body portion by including a first binding hook (523b) engaged with the at least one first binding hole (521a); and
an interference member (525) at least partially accommodated in the second accommodation space (511b) and coupled to the inner surface of the body portion by including a second binding hook (525b) engaged with the at least one second binding hole (521b).

2. The electronic device of claim 1, wherein the interference member (525) is disposed in the second accommodation space (511b) to reciprocate along the first direction (D1).

3. The electronic device of claim 1 or 2, wherein the body portion (521; 621; 721) has a first modulus of elasticity, and the key cap (523; 623; 723) or the interference member (525) has a second modulus of elasticity greater than the first modulus of elasticity.

4. The electronic device of any one of claims 1 to 3, wherein the at least one first binding hole (521a) or the at least one second binding hole (521b) extends parallel to the first direction (D1) or obliquely to the first direction (D1).

5. The electronic device of any one of claims 1 to 4, wherein the key cap (523; 623; 723) includes an electrically conductive material.

6. The electronic device of any one of claims 1 to 5, wherein the key assembly (402; 602; 702) includes,
a first binding protrusion (521e) formed on any one of an inner wall of the at least one first binding hole (521a) and an outer circumferential surface of the first binding hook (523b); and
a first binding recess (523e) formed on the other of the inner wall of the at least one first binding hole (521a) and the outer circumferential surface of the first binding hook (523b), and
wherein the first binding protrusion (521e) is engaged with the first binding recess (523e), so that the key cap (523; 623; 723) is fixed to the body portion (521; 621; 721).

7. The electronic device of any one of claims 1 to 6, wherein the key assembly (402; 602; 702) includes,
a second binding protrusion (521f) formed on any one of an inner wall of the at least one second binding hole (521b) and an outer circumferential surface of the second binding hook (525b); and
a second binding recess (525c) formed on the other of the inner wall of the at least one second binding hole (521b) and the outer circumferential surface of the second binding hook (525b), and
wherein the second binding protrusion (521f) is engaged with the second binding recess (525c), so that the interference member (525) is fixed to the body portion (521; 621; 721).

8. The electronic device of any one of claims 1 to 7, wherein the key assembly (402; 602; 702) further includes an operation rod (523c) extending from an inner surface of the key cap (523; 623; 723) and protruding from the inner surface of the body portion (521; 621; 721).

9. The electronic device of claim 8, wherein the key assembly (402; 602; 7102) further includes,
a guide tube (527a) engaged with the side member (411); and
an O-ring (527b) coupled around at least a portion of an outer circumferential surface of the operation rod (523c), and
wherein the operation rod (523c) is disposed through the guide tube (527a) and the O-ring (527b) contacts the guide tube (527a).

10. The electronic device of claim 9, wherein the key assembly (402; 602; 702) further includes a dummy recess (523f) formed on the outer circumferential surface of the operation rod (523c), and
wherein at least a portion of the O-ring (527b) is accommodated in the dummy recess.

11. The electronic device of any one of claims 8 to 10, wherein the key assembly (402; 602; 702) further includes,
a washer (529a) disposed around the operation rod (523c); and
a coil spring (529b) with one end supported by the washer (529a) and the other end supported by the inner surface of the key cap (523; 623; 723).

12. The electronic device of any one of claims 8 to 11, wherein the key assembly (402; 602; 702) further includes,
an alignment protrusion (521d) protruding from one of the outer surface of the body portion (521; 621; 721) and the inner surface of the key cap (523; 623; 723); and
an alignment recess (523d) provided on the other of the outer surface of the body portion (521; 621; 721) and the inner surface of the key cap (523; 623; 723) at one side of the operation rod (523c) and configured to accommodate at least a portion of the alignment protrusion (521d).

13. The electronic device of any one of claims 8 to 12, further comprising:
a switch member (473a) disposed inside the housing (401) and aligned to face the operation rod (523c).

14. The electronic device of any one of claims 1 to 13, wherein the key assembly (402; 602; 702) further includes an inclined surface or a curved surface (CS) connecting an inner wall of the at least one second binding hole (521b) and the inner surface of the body portion (521; 621; 721).
